(19) **Europäisches Patentamt / European Patent Office / Office européen des brevets**

(11) **EP 4 660 619 A1**

(12) **EUROPEAN PATENT APPLICATION**
published in accordance with Art. 153(4) EPC

(43) Date of publication:
**10.12.2025 Bulletin 2025/50**

(21) Application number: **23920009.0**

(22) Date of filing: **26.12.2023**

(51) International Patent Classification (IPC):
**G01N 22/00** *(2006.01)*   **G01N 22/02** *(2006.01)*
**G01S 13/89** *(2006.01)*

(52) Cooperative Patent Classification (CPC):
**G01N 22/00; G01N 22/02; G01S 13/89**

(86) International application number:
**PCT/JP2023/046615**

(87) International publication number:
**WO 2024/161874 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.02.2023   JP 2023014161**

(71) Applicant: **K-Theory Inc.**
**Kobe-shi, Hyogo 651-0087 (JP)**

(72) Inventors:
• **KIMURA, Kenjiro**
  **Kobe-shi, Hyogo 651-0056 (JP)**
• **KIMURA, Noriaki**
  **Kobe-shi, Hyogo 651-0056 (JP)**
• **KIMURA, Fumitoshi**
  **Kobe-shi, Hyogo 651-0056 (JP)**

(74) Representative: **KATZAROV S.A.**
**Geneva Business Center**
**12 Avenue des Morgines**
**1213 Petit-Lancy (CH)**

(54) **VISUALIZATION DEVICE AND VISUALIZATION METHOD**

(57)    An imaging device (100) includes: a plurality of transmitters (101) that each transmit a wave to a measurement area; a plurality of receivers (102) that each receive a scattered wave of the wave from the measurement area; and an information processing circuit (103) that images an object in the measurement area using measurement data of the scattered wave. The information processing circuit (103): derives a scattering field function using the measurement data and a velocity vector of the object; derives an imaging function that is defined using an amount output from the scattering field function in response to inputting an imaging target position into the scattering field function; and images the object in the measurement area using the imaging function. The information processing circuit (103) derives the scattering field function from the measurement data using a coordinate system in which the position of the object is fixed.

FIG. 8

## Description

[Technical Field]

The present disclosure relates to an imaging device, etc., that images an object in a measurement area using measurement data of scattered waves.

[Background Art]

As techniques related to an imaging device or the like for imaging an object in a measurement area using measurement data of scattered waves, there are techniques described in Patent Literatures (PTLs) 1 to 5.

For example, according to the technique described in PTL 1, beams sent out from a microwave sender are incident on an object to be inspected, and the amplitudes and phases of scattered beams are detected by a microwave detector. Then, the distribution of dielectric constants is calculated from output signals output from the microwave detector to display a tomogram of the object to be inspected.

[Citation List]

[Patent Literature]

[PTL 1] Japanese Unexamined Patent Application Publication No. S62-66145
[PTL 2] WO 2014/125815
[PTL 3] WO 2015/136936
[PTL 4] WO 2021/020387
[PTL 5] WO 2021/053971

[Summary of Invention]

[Technical Problem]

However, it is not easy to image an object in a measurement area using measurement data of scattered waves. More specifically, estimating measurement data on scattered waves radiated from the measurement area in relation to waves that are incident on the measurement area when the condition in the measurement area is known is called a forward problem and easy. However, obtaining the condition in the measurement area when measurement data on scattered waves is known is called an inverse problem and is not easy.

When an object moves in the measurement area, the position of the object becomes uncertain, making it difficult to image the object with high accuracy.

In view of this, the present disclosure provides an imaging device or the like that is capable of imaging a moving object in the measurement area with high accuracy.

[Solution to Problem]

An imaging device according to one aspect of the present disclosure includes: a plurality of transmitters that each transmit a wave to a measurement area; a plurality of receivers that each receive a scattered wave of the wave from the measurement area; and an information processing circuit that images an object in the measurement area using measurement data of the scattered wave. In imaging the object, the information processing circuit: derives, using the measurement data and a velocity vector of the object, a scattering field function that receives a transmission position of the wave and a reception position of the scattered wave as input and outputs an amount of the scattered wave at the reception position; derives an imaging function that receives an imaging target position as input and outputs an image intensity at the imaging target position, and is defined using an amount output from the scattering field function in response to inputting the imaging target position into the scattering field function as the transmission position and the reception position; and images the object in the measurement area using the imaging function. In deriving the scattering field function, the information processing circuit derives the scattering field function from the measurement data using a coordinate system that is determined using the velocity vector and in which a position of the object is fixed in at least two directions.

These general or specific aspects may be implemented as a system, a device or apparatus, a method, an integrated circuit, a computer program, or a non-transitory computer-readable recording medium such a CD-ROM, or any combination thereof.

[Advantageous Effects of Invention]

According to the present disclosure, it is possible to image a moving object in the measurement area with high accuracy.

[Brief Description of Drawings]

[FIG. 1]

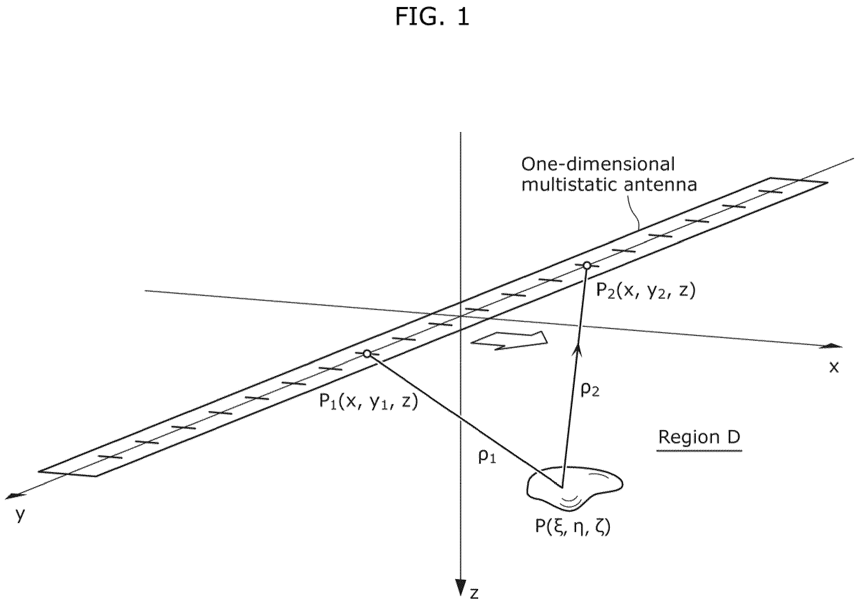

FIG. 1 is a conceptual diagram showing a one-dimensional multistatic array antenna.
[FIG. 2]

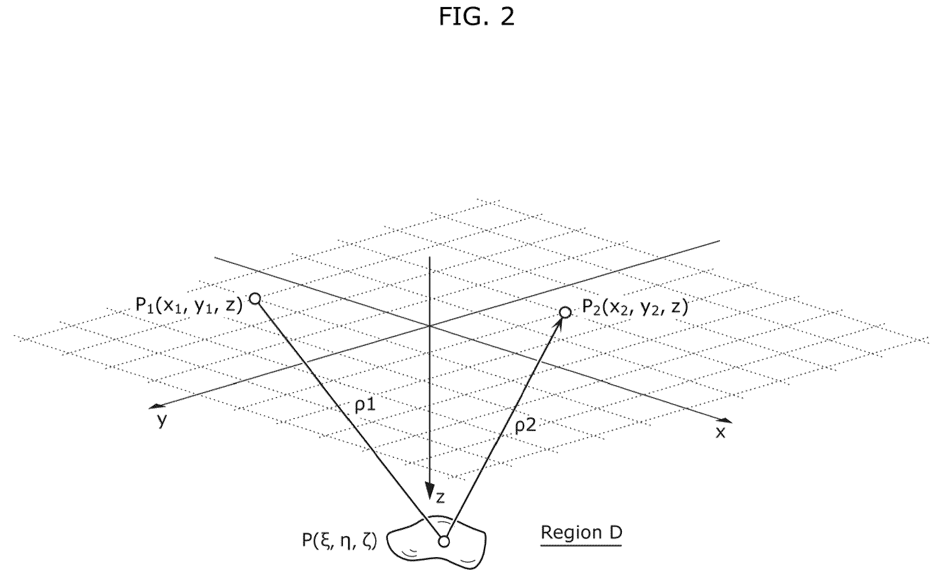

FIG. 2 is a conceptual diagram showing the relationship between a transmission point and a reception point in a plane.
[FIG. 3]

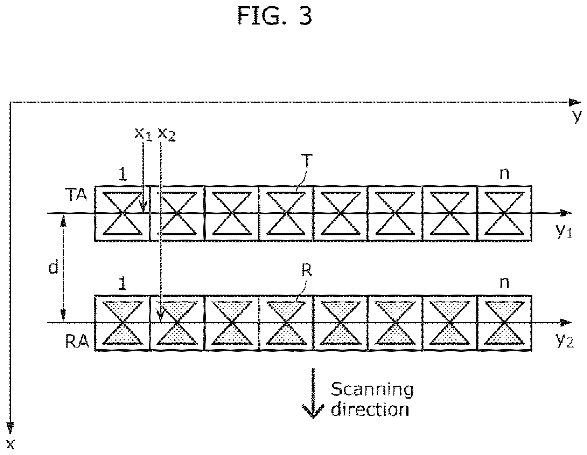

FIG. 3 is a conceptual diagram showing an example of coordinates relating to a semi-two-dimensional array antenna.
[FIG. 4]

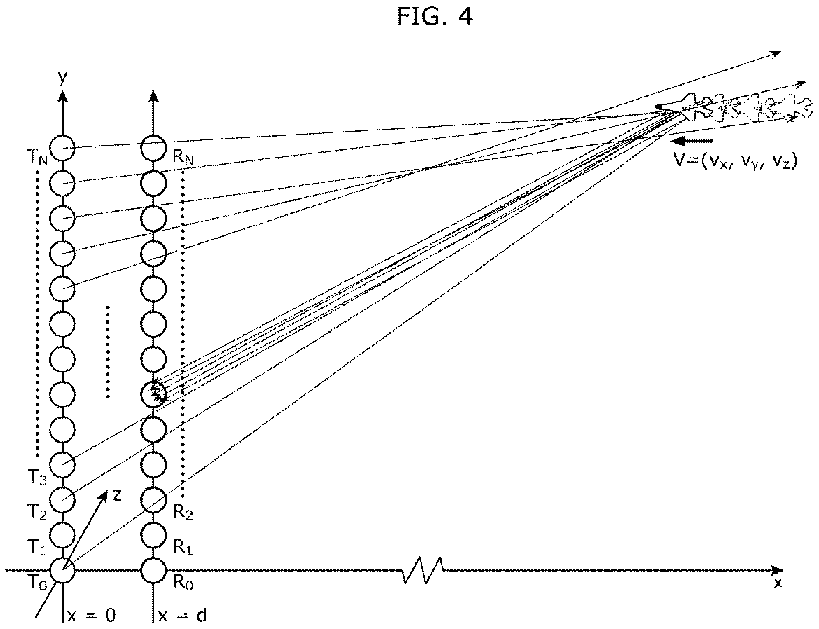

FIG. 4 is a conceptual diagram illustrating the relationship between a plurality of transmitters, a plurality of receivers, and a flying object.
[FIG. 5]

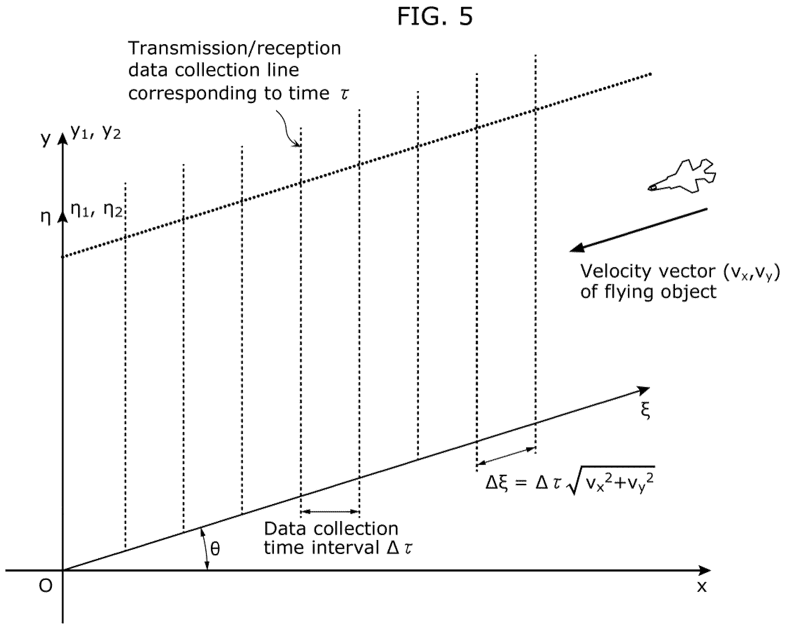

FIG. 5 is a conceptual diagram illustrating two coordinate systems when a one-dimensional array transmitting/receiving array antenna is used.
[FIG. 6]

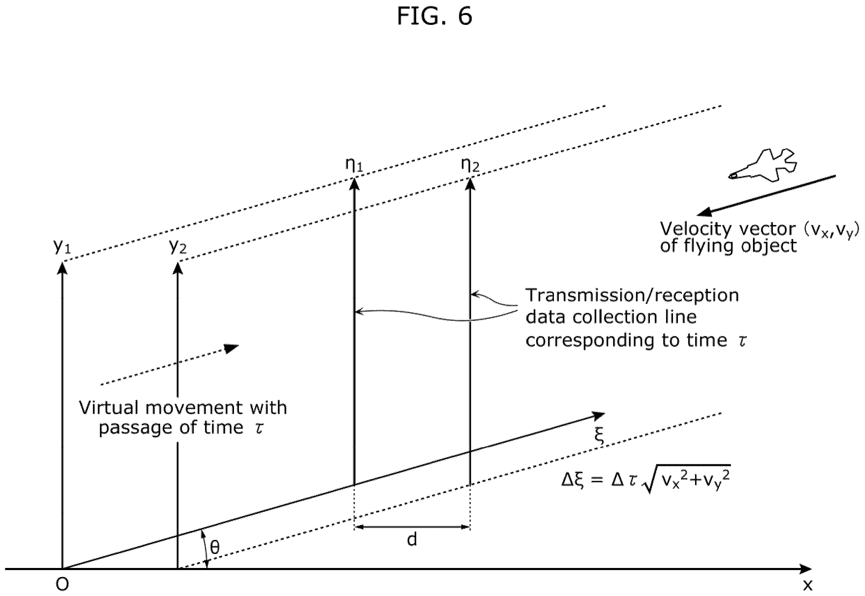

FIG. 6 is a conceptual diagram illustrating two coordinate systems when a semi-two-dimensional array transmitting array antenna and receiving array antenna are used.
[FIG. 7]

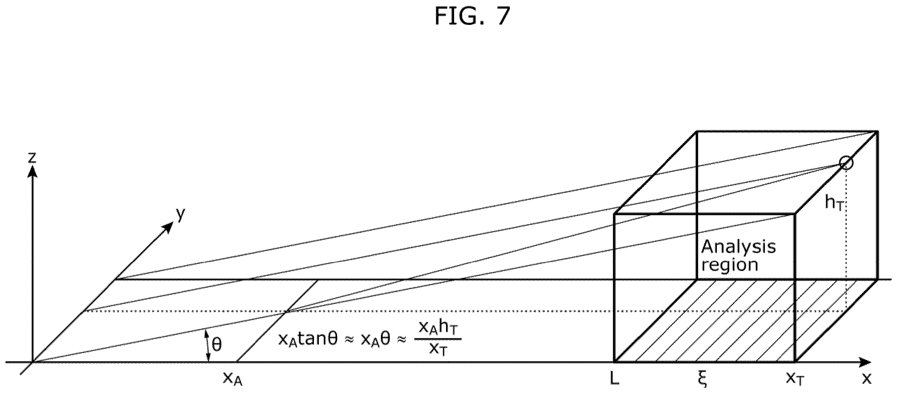

FIG. 7 is a conceptual diagram showing an analysis region far from the antenna installation position.
[FIG. 8]

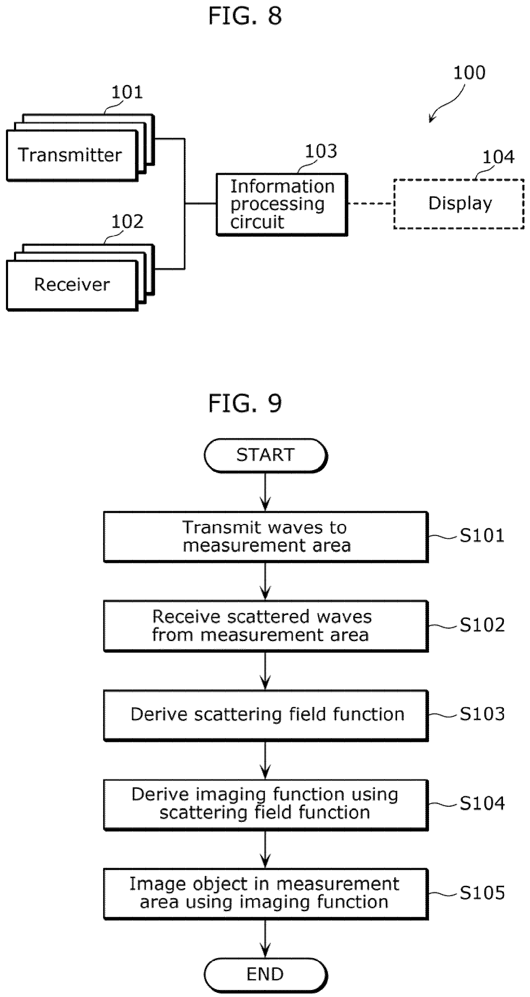

FIG. 8 is a block diagram showing a basic configuration of an imaging device.
[FIG. 9]
FIG. 9 is a flowchart showing basic operations of an imaging device.

[Description of Embodiments]

An imaging device according to one aspect of the present disclosure includes: a plurality of transmitters that each transmit a wave to a measurement area; a plurality of receivers that each receive a scattered wave of the wave from the measurement area; and an information processing circuit that images an object in the measurement area using measurement data of the scattered wave. In imaging the object, the information processing circuit: derives, using the measurement data and a velocity vector of the object, a scattering field function that receives a transmission position of the wave and a reception position of the scattered wave as input and outputs an amount of the scattered wave at the reception position; derives an imaging function that receives an imaging target position as input and outputs an image intensity at the imaging target position, and is defined using an amount output from the scattering field function in response to inputting the imaging target position into the scattering field function as the transmission position and the reception position; and images the object in the measurement area using the imaging function. In deriving the scattering field function, the information processing circuit derives the scattering field function from the measurement data using a coordinate system that is determined using the velocity vector and in which a position of the object is fixed in at least two directions.
This allows the imaging device to image the object by fixing the position of the object. Accordingly, the imaging device is capable of imaging a moving object in the measurement area with high accuracy. The imaging device is capable of transmitting waves and receiving scattered waves from various directions with respect to the object without having to move the plurality of transmitters and the plurality of receivers. Accordingly, the imaging device is capable of obtaining sufficient information and imaging the object with high accuracy even with a small number of transmitters and receivers.
For example, the plurality of transmitters and the plurality of receivers are arranged along a straight line parallel to a y-axis,

the scattering field function is expressed as:

[Math. 1]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\Phi}(uk_x + wk_{y_1} + wk_{y_2}, k_{y_1}, k_{y_2}, k)$$

$$\cdot e^{i\{\sqrt{(\sqrt{k^2 - k_{y_1}^2} + \sqrt{k^2 - k_{y_2}^2})^2 - k_x^2}\}z} u \, dk_x \, dk_{y_1} \, dk_{y_2}$$

where x and z of the scattering field function respectively represent an x-coordinate and a z-coordinate of the transmission position and the reception position, $y_1$ of the scattering field function represents a y-coordinate of the transmission position, $y_2$ of the scattering field function represents a y-coordinate of the reception position, k represents a wavenumber of the wave, and $k_x$, $k_{y1}$, and $k_{y2}$ respectively represent variables corresponding to wavenumbers with respect to x, $y_1$, and $y_2$ of the scattering field function,

[Math. 2]

$$\tilde{\Phi}$$

represents the measurement data that has been Fourier transformed, and
u and w are defined as:

[Math. 3]

$$u = -v_x \left| \sqrt{v_x^2 + v_y^2} \right|^{-1}$$

$$w = -v_y \left| \sqrt{v_x^2 + v_y^2} \right|^{-1}$$

where $v_x$ and $v_y$ respectively represent an x-component and a y-component of the velocity vector.

This allows the imaging device to image a moving object in the measurement area with high accuracy by using the scattering field function derived from the measurement data obtained by the plurality of transmitters and the plurality of receivers arranged in a straight line.
For example, the imaging function is expressed as:

[Math. 4]

$$\rho(x, y, z)$$

$$= \frac{1}{(2\pi)^3} \int_0^{\infty} \int_{-\infty}^{\infty} \int_{-\infty}^{\infty} \int_{-\infty}^{\infty} e^{-i(k_x x + k_{y_1} y + k_{y_2} y)} \tilde{\Phi}(uk_x + wk_{y_1} + wk_{y_2}, k_{y_1}, k_{y_2}, k)$$

$$\cdot e^{ik_z z} \left( \frac{dk}{dk_z} \right) u \, dk_x \, dk_{y_1} \, dk_{y_2} \, dk_z$$

where x, y, and z of the imaging function respectively represent an x-coordinate, a y-coordinate, and a z-coordinate of the imaging target position, and
$k_z$ and $dk/dk_z$ are defined as:

[Math. 5]

$$k_z = \sqrt{(\sqrt{k^2 - k_{y_1}^2} + \sqrt{k^2 - k_{y_2}^2})^2 - k_x^2}$$

$$\frac{dk}{dk_z} = \frac{k_z\sqrt{k^2 - k_{y_1}^2}\sqrt{k^2 - k_{y_2}^2}}{k(k_x^2 + k_z^2)}$$

.

This allows the imaging device to image a moving object in the measurement area with high accuracy by using the imaging function derived from the measurement data obtained by the plurality of transmitters and the plurality of receivers arranged in a straight line.
For example, the plurality of transmitters are arranged along a first straight line parallel to a y-axis,

the plurality of receivers are arranged along a second straight line parallel to the y-axis,
the scattering field function is expressed as:

[Math. 6]

$$\varphi(x_1, y_1, x_2, y_2, z, k)$$

$$= \frac{1}{(2\pi)^3} \int_{-\infty}^{\infty}\int_{-\infty}^{\infty}\int_{-\infty}^{\infty} e^{-i(k_{x_1}x_1 + k_{y_1}y_1 + k_{y_2}y_2)}$$

$$\cdot e^{s_3(x_2-d)} e^{s_4 z} u\, \tilde{\Phi}(k_x u + k_{y_1}w + k_{y_2}w, k_{y_1}, k_{y_2}, k)dk_x dk_{y_1} dk_{y_2}$$

where z of the scattering field function represents a z-coordinate of the transmission position and the reception position, $x_1$ and $y_1$ of the scattering field function respectively represent an x-coordinate and a y-coordinate of the transmission position, $x_2$ and $y_2$ of the scattering field function respectively represent an x-coordinate and a y-coordinate of the reception position, k represents a wavenumber of the wave, $k_x$, $k_{y1}$, and $k_{y2}$ respectively represent variables corresponding to wavenumbers with respect to x, $y_1$, and $y_2$ of the scattering field function, and d represents a distance between the first straight line and the second straight line,

[Math. 7]

$$\tilde{\Phi}$$

represents the measurement data that has been Fourier transformed,
$s_3$ and $s_4$ are defined as:

[Math. 8]

$$s_3 = \frac{-i k_{x_1} \sqrt{k^2 - k_{y_2}^2}}{\sqrt{k^2 - k_{y_1}^2}}$$

$$s_4 = i \sqrt{\left(\sqrt{k^2 - k_{y_1}^2} + \sqrt{k^2 - k_{y_2}^2}\right)^2 - (k_{x_1} + i s_3)^2}$$

and u and w are defined as:

[Math. 9]

$$u = -v_x \left| \sqrt{v_x^2 + v_y^2} \right|^{-1}$$

$$w = -v_y \left| \sqrt{v_x^2 + v_y^2} \right|^{-1}$$

where $v_x$ and $v_y$ respectively represent an x-component and a y-component of the velocity vector.

This allows the imaging device to image a moving object in the measurement area with high accuracy by using the scattering field function derived from the measurement data obtained by the plurality of transmitters arranged on a first straight line and the plurality of receivers arranged on a second straight line.

Moreover, for example, the imaging function is expressed as:

[Math. 10]

$$\rho(x, y, z)$$

$$= \frac{1}{(2\pi)^3} \int_0^\infty dk \int_{-\infty}^\infty \int_{-\infty}^\infty \int_{-\infty}^\infty e^{-i(k_x x + k_{y_1} y + k_{y_2} y)}$$

$$\cdot e^{-s_3 d} e^{s_4 z} u \tilde{\Phi}(k_x u + k_{y_1} w + k_{y_2} w, k_{y_1}, k_{y_2}, k) dk_x dk_{y_1} dk_{y_2}$$

where x, y, and z of the imaging function respectively represent an x-coordinate, a y-coordinate, and a z-coordinate of the imaging target position.

This allows the imaging device to image a moving object in the measurement area with high accuracy by using the imaging function derived from the measurement data obtained by the plurality of transmitters arranged on a first straight line and the plurality of receivers arranged on a second straight line.

For example, the information processing circuit images the object using the imaging function in which an x-coordinate is shifted by x = L + ξ, and

the imaging function in which the x-coordinate is shifted is expressed as:

[Math. 11]

$$\rho(\xi, y, z)$$

$$= \frac{1}{(2\pi)^3} \int_0^\infty dk \int_{-\infty}^\infty \int_{-\infty}^\infty \int_{-\infty}^\infty e^{-i(k_x \xi + k_{y_1} y + k_{y_2} y)}$$

$$\cdot e^{-s_3 d} e^{s_4 z} u \left\{ e^{-ik_x L} \tilde{\Phi}(k_x u + k_{y_1} w + k_{y_2} w, k_{y_1}, k_{y_2}, k) \right\} dk_x dk_{y_1} dk_{y_2}$$

where L represents an amount of shift in the x-coordinate, and ξ represents the x-coordinate shifted by L.

This allows the imaging device to shift the imaging target area. Accordingly, the imaging device is capable of efficiently imaging a distant object from the plurality of transmitters and the plurality of receivers.

For example, the information processing circuit: derives a provisional scattering field function using the measurement data without using the velocity vector; derives a provisional imaging function using the provisional scattering field function; and derives the velocity vector using the provisional imaging function.

This allows the imaging device to derive the velocity vector of the object using the provisional scattering field function and the provisional imaging function derived without using the velocity vector of the object. The imaging device is capable of imaging an object that moves in the measurement area with high accuracy by using the scattering field function and the imaging function derived using the velocity vector.

For example, in deriving the velocity vector, the information processing circuit:

derives the velocity vector using an arithmetic expression represented as:

[Math. 12]

$$\begin{pmatrix} v_x \\ v_y \\ v_z \end{pmatrix} = - \begin{pmatrix} 2a+2\varepsilon & e & g \\ e & 2b+2\varepsilon & f \\ g & f & 2c+2\varepsilon \end{pmatrix}^{-1} \begin{pmatrix} h \\ m \\ n \end{pmatrix}$$

where a, b, c, e, f, g, h, m, and n in the arithmetic expression are defined as:

[Math. 13]

$$a = \frac{1}{(2\pi)^3} \iiint k_x^2 \left| \rho_k \right|^2 d\mathbf{k}^3$$

$$b = \frac{1}{(2\pi)^3} \iiint k_y^2 \left| \rho_k \right|^2 d\mathbf{k}^3$$

$$c = \frac{1}{(2\pi)^3} \iiint k_z^2 \left| \rho_k \right|^2 d\mathbf{k}^3$$

$$e = \frac{1}{(2\pi)^3} \iiint k_x k_y \left| \rho_k \right|^2 d\mathbf{k}^3 + cc.$$

$$f = \frac{1}{(2\pi)^3} \iiint k_y k_z \left| \rho_k \right|^2 d\mathbf{k}^3 + cc.$$

$$g = \frac{1}{(2\pi)^3} \iiint k_z k_x \left| \rho_k \right|^2 d\mathbf{k}^3 + cc.$$

$$h = \frac{-i}{(2\pi)^3} \iiint k_x \rho_k \cdot \partial_\tau \overline{\rho}_k d\mathbf{k}^3 + cc.$$

$$m = \frac{-i}{(2\pi)^3} \iiint k_y \rho_k \cdot \partial_\tau \overline{\rho}_k d\mathbf{k}^3 + cc.$$

$$n = \frac{-i}{(2\pi)^3} \iiint k_z \rho_k \cdot \partial_\tau \overline{\rho}_k d\mathbf{k}^3 + cc.$$

$v_x$, $v_y$, and $v_z$ respectively represent an x-component, a y-component, and a z-component of the velocity vector, $\varepsilon$ represents a positive value, $\rho_k$ represents the provisional imaging function that includes $\tau$ as one of a plurality of input variables and is Fourier transformed with respect to x, y, and z, and $k_x$, $k_y$, and $k_z$ in the arithmetic expression respectively represent wavenumbers with respect to x, y, and z of the provisional imaging function,

[Math. 14]

$$\mathbf{k}$$

represents a wavenumber vector of $k_x$, $k_y$, and $k_z$ in the arithmetic expression, $\tau$ represents a time unit corresponding to a number of data collections, and cc. represents a complex conjugate of a term immediately preceding cc., and

[Math. 15]

$$\overline{\rho}_k$$

represents the complex conjugate of $\rho_k$.

This allows the imaging device to derive the velocity vector of the object from the provisional imaging function using an arithmetic expression.

An imaging method according to one aspect of the present disclosure includes: transmitting, by each of a plurality of transmitters, a wave to a measurement area; receiving, by each of a plurality of receivers, a scattered wave of the wave from the measurement area; and imaging an object in the measurement area using measurement data of the scattered wave. The imaging of the object includes: deriving, using the measurement data and a velocity vector of the object, a scattering field function that receives a transmission position of the wave and a reception position of the scattered wave as input and outputs an amount of the scattered wave at the reception position; deriving an imaging function that receives an imaging target position as input and outputs an image intensity at the imaging target position, and is defined using an amount output from the scattering field function in response to inputting the imaging target position into the scattering field function as the transmission position and the reception position; and imaging the object in the measurement area using the imaging function. In the deriving of the scattering field function, the scattering field function is derived from the measurement data using a coordinate system that is determined using the velocity vector and in which a position of the object is fixed in at least two directions.

This allows imaging of the object by fixing the position of the object. Accordingly, it is possible to image a moving object in the measurement area with high accuracy. It is possible to transmit waves and receive scattered waves from various directions with respect to the object without having to move the plurality of transmitters and the plurality of receivers. Accordingly, it is possible to obtain sufficient information and image the object with high accuracy even with a small number of transmitters and receivers.

Hereinafter, embodiments will be described with reference to the drawings. Each of the following embodiments describes a general or specific example. The numerical values, shapes, materials, elements, the arrangement and connection of the elements, steps, the order of the steps etc., presented in the following embodiments are mere examples, and do not limit the scope of the claims.

In the following description, in particular the techniques or the like described in PTLs 2 to 5 given above may be referenced to as existing techniques. Although radio waves or electromagnetic waves such as microwaves are primarily assumed as the waves in the following description, the waves are not limited to radio waves or electromagnetic waves such as microwaves, and may be elastic waves or the like. Imaging based on scattering may be expressed as scattering tomography. Thus, the imaging device and imaging method described below may also be expressed as a scattering tomographic device and a scattering tomographic method, respectively.

[Embodiment]

An imaging device according to the present embodiment images an object in a measurement area using measurement data of scattered waves. Hereinafter, the imaging device according to the present embodiment, including techniques and theories serving as the basis of the imaging device, will be described in detail.

< 1. Overview>

Scattering field theory is a theory used for imaging an object in a measurement area. For example, waves are transmitted from each of a plurality of transmission positions to the measurement area, and scattered waves from the measurement area are received at each of a plurality of reception positions. Measurement data of the scattered waves is obtained for each combination of transmission position and reception position. The object in the measurement area is then imaged using the measurement data. At this time, using the scattering field theory, the condition of scattering in the measurement area is calculated from the measurement data, and the object is imaged with high accuracy based on the condition of scattering.

However, when an object moves in the measurement area, the position of the object becomes uncertain, making it difficult to image the object with high accuracy.

In view of this, the present disclosure describes a scattering field theory for imaging a moving object in the measurement area with high accuracy. More specifically, first, a scattering field theory that does not take the movement of the object into consideration will be described, and then, a scattering field theory that does take the movement of the object into consideration will be described.

<2. Scattering Field Theory Without Consideration of Object Movement>

In this chapter, a scattering field theory that does not take the movement of the object into consideration will be described.

<2-1. One-dimensional Array>

FIG. 1 is a conceptual diagram showing a one-dimensional multistatic array antenna. As illustrated in FIG. 1, by using two arbitrary elements from among n elements as a transmitting element and a receiving element, it is possible to obtain double the resolution compared to a monostatic environment where the pair of transmitting and receiving elements is fixed. Moreover, singles can be received with a high S/N ratio at a range of distances from short distance to long distance. This considerably improves the quality of an ultimate image. Whereas, as a matter of course, the amount of data is increased to n times, the time required for reconstruction is also shortened dramatically according to the theory described below.

Here, a situation is examined in which a radio wave radiated from point $P_1(x, y_1, z)$ is reflected at point $P(\xi, \eta, \zeta)$ and received at point $P_2(x, y_2, z)$ as shown in FIG. 1. In the case where point P is assumed to move in entire region D, the signal received at point $P_2$ is represented by expression (2-1-1) below.

[Math. 16]

$$\varphi(x, y_1, y_2, z) = \iint_D \frac{e^{ik\rho_1}}{\rho_1} \frac{e^{ik\rho_2}}{\rho_2} \varepsilon(\xi, \eta, \zeta) d\xi d\eta d\zeta$$

$$\rho_1 = \sqrt{(x-\xi)^2 + (y_1-\eta)^2 + (z-\zeta)^2}$$

$$\rho_2 = \sqrt{(x-\xi)^2 + (y_2-\eta)^2 + (z-\zeta)^2}$$

$$\cdot \cdot \cdot (2-1-1)$$

Here, $\varepsilon(\xi, \eta, \zeta)$ represents the function of the dielectric constant at point $P(\xi, \eta, \zeta)$ and corresponds to the reflectance at point $P(\xi, \eta, \zeta)$. Point $P(\xi, \eta, \zeta)$ corresponds to the reflection point. Note that $\varepsilon(\xi, \eta, \zeta)$ is unknown. It is assumed that the time factor is proportional to exp(-iωt). The kernel function in the integrand term of the above equation is represented as φ in expression (2-1-2) below.

[Math. 17]

$$\phi = \frac{e^{ik\rho_1}}{\rho_1} \frac{e^{ik\rho_2}}{\rho_2}$$

$$\cdot \cdot \cdot (2-1-2)$$

Next, a partial differential equation that has expression (2-1-2) as an asymptotical solution is examined. Thus, calculation is performed while ignoring a high-order term with respect to 1/ρ obtained as a result of differentiation. Here, an abridged notation for differentiation is defined by expression (2-1-3).

[Math. 18]

$$\frac{\partial}{\partial t} \to \partial_t, \frac{\partial}{\partial x} \to \partial_x, \frac{\partial}{\partial y_1} \to \partial_{y_1}, \frac{\partial}{\partial y_2} \to \partial_{y_2}, \frac{\partial}{\partial z} \to \partial_z$$

$$\cdot \cdot \cdot (2-1-3)$$

Here, a partial differential equation that has expression (2-1-2) as an asymptotical solution at short wavelengths (at high frequency or when k is large) is examined. This solution to the partial differential equation may be regarded as almost an exact solution in imaging using microwaves. First, the result of differentiation of each order of φ is represented by expression (2-1-4) below.

[Math. 19]

$$\partial_x\phi = ik(x-\xi)(\frac{1}{\rho_1}+\frac{1}{\rho_2})\phi+o(\rho^{-3}) \qquad \partial_{y_1}\phi = ik\frac{y_1-\eta}{\rho_1}\phi+o(\rho^{-3})$$

$$\partial_{y_2}\phi = ik\frac{y_2-\eta}{\rho_2}\phi+o(\rho^{-3}) \qquad \partial_z\phi = ik(z-\zeta)(\frac{1}{\rho_1}+\frac{1}{\rho_2})\phi+o(\rho^{-3})$$

$$\partial_x\partial_x\phi = (ik)^2(x-\xi)^2(\frac{1}{\rho_1}+\frac{1}{\rho_2})^2\phi+o(\rho^{-3})$$

$$\partial_z\partial_z\phi = (ik)^2(z-\zeta)^2(\frac{1}{\rho_1}+\frac{1}{\rho_2})^2\phi+o(\rho^{-3})$$

$$\partial_{y_1}\partial_{y_1}\phi = (ik)^2(\frac{y_1-\eta}{\rho_1})^2\phi+o(\rho^{-3})$$

$$\partial_{y_2}\partial_{y_2}\phi = (ik)^2(\frac{y_2-\eta}{\rho_2})^2\phi+o(\rho^{-3})$$

$$\cdots(2-1-4)$$

Hereinafter, the complexity o(*) is omitted. In accordance with the sum of four differential equations of the second order, expression (2-1-5) below is obtained.
[Math. 20]

$$\Delta_4\phi = (\partial_x^2+\partial_{y_1}^2+\partial_{y_2}^2+\partial_z^2)\phi$$

$$= (ik)^2\{2+2\frac{(x-\xi)^2+(z-\zeta)^2}{\rho_1\rho_2}\}\phi$$

$$\cdots(2-1-5)$$

Accordingly, expression (2-1-6) below is obtained from expression (2-1-5).
[Math. 21]

$$\{\Delta_4-2(ik)^2\}\phi = 2(ik)^2\frac{\rho_1^2-(y_1-\eta)^2}{\rho_1\rho_2}\phi$$

$$= 2(ik)^2\frac{\rho_2^2-(y_2-\eta)^2}{\rho_1\rho_2}\phi$$

$$\cdots(2-1-6)$$

By acting the operation of expression (2-1-6) two times, expression (2-1-7) below is obtained.
[Math. 22]

$$\{\Delta_4 - 2(ik)^2\}^2 \phi = 4(ik)^4 \frac{\{\rho_1^2 - (y_1 - \eta)^2\}\{\rho_2^2 - (y_2 - \eta)^2\}}{\rho_1^2 \rho_2^2} \phi$$

$$= 4(ik)^4 \{1 - (ik)^{-2} \partial_{y_1}^2\}\{1 - (ik)^{-2} \partial_{y_2}^2\} \phi$$

$$\cdots (2-1-7)$$

Expression (2-1-7) is summarized to obtain expression (2-1-8) below.
[Math. 23]

$$[\frac{1}{4}\{\Delta_4 - 2(ik)^2\}^2 - \partial_{y_1}^2 \partial_{y_2}^2 + (ik)^2 (\partial_{y_1}^2 + \partial_{y_2}^2) - (ik)^4]\phi = 0$$

$$\cdots (2-1-8)$$

Although expression (2-1-8) is derived assuming a steady state, it is easy to extend expression (2-1-8) to a non-steady state. Thus, variables are substituted as given by expression (2-1-9) below, using partial differential $\partial_t$ with respect to time t and using propagation velocity c of radio waves.
[Math. 24]

$$-ik \rightarrow \frac{1}{c}\partial_t$$

$$\cdots (2-1-9)$$

Through the process described above, an equation represented by expression (2-1-10) below is ultimately obtained.
[Math. 25]

$$\{\Delta_4^2 - \frac{4}{c^2}(\partial_t^2 \partial_x^2 + \partial_t^2 \partial_z^2) - 4\partial_{y_1}^2 \partial_{y_2}^2\}\phi = 0$$

$$\Delta_4 = \partial_x^2 + \partial_{y_1}^2 + \partial_{y_2}^2 + \partial_z^2$$

$$\cdots (2-1-10)$$

Expression (2-1-10) described above is a partial differential equation that has φ in expression (2-1-2) as a solution. By applying differentiation to the kernel of expression (2-1-1),

$$[\text{Math. 26}]$$

$$\varphi$$

of expression (2-1-1) also satisfies the partial differential equation described above. This equation is a four-dimensional pseudo wave equation configured by five variables (t, x, $y_1$, $y_2$, z).
Next, this equation is solved by Fourier transform. First,

[Math. 27]

$$\varphi$$

is subjected to multiplex Fourier transform with respect to t, x, $y_1$, $y_2$ as given by expression (2-1-11) below.
[Math. 28]

$$\tilde{\varphi}(k_x, k_{y_1}, k_{y_2}, z, \omega) = \int_{-\infty}^{\infty} e^{i\omega t} dt \int_{-\infty}^{\infty} \int_{-\infty}^{\infty} \int_{-\infty}^{\infty} e^{i(k_x x + k_{y_1} y_1 + k_{y_2} y_2)} \varphi(x, y_1, y_2, z, t) dx dy_1 dy_2$$

$$\cdots (2-1-11)$$

When the differential with respect to z is expressed as $D_z$, expression (2-1-12) below is obtained from expressions (2-1-10) and (2-1-11).
[Math. 29]

$$\{(D_z^2 - k_x^2 - k_{y_1}^2 - k_{y_2}^2)^2 + 4k^2(D_z^2 - k_x^2) - 4k_{y_1}^2 k_{y_2}^2\}\tilde{\varphi} = 0$$

$$\cdots (2-1-12)$$

Here, the relationship of $\omega = ck$ is used. Four basic solutions to this equation are expressed as given by expression (2-1-13) below.
[Math. 30]

$$E_1 = e^{i\{\sqrt{(\sqrt{k^2 - k_{y_1}^2} + \sqrt{k^2 - k_{y_2}^2})^2 - k_x^2}\}z}$$

$$E_2 = e^{-i\{\sqrt{(\sqrt{k^2 - k_{y_1}^2} + \sqrt{k^2 - k_{y_2}^2})^2 - k_x^2}\}z}$$

$$E_3 = e^{i\{\sqrt{(\sqrt{k^2 - k_{y_1}^2} - \sqrt{k^2 - k_{y_2}^2})^2 - k_x^2}\}z}$$

$$E_4 = e^{-i\{\sqrt{(\sqrt{k^2 - k_{y_1}^2} - \sqrt{k^2 - k_{y_2}^2})^2 - k_x^2}\}z}$$

$$\cdots (2-1-13)$$

Considering the facts that the time factor is $e^{-i\omega t}$, the phase is added using the path of radiated radio waves, and radio waves reflected off the object are bounced off toward a measurement surface (measurement plane), $E_1$ is the unique meaningful solution. Accordingly, expression (2-1-14) below is obtained.
[Math. 31]

$$\tilde{\varphi}(k_x, k_{y_1}, k_{y_2}, z, k) = a(k_x, k_{y_1}, k_{y_2}, k)e^{i\{\sqrt{(\sqrt{k^2 - k_{y_1}^2} + \sqrt{k^2 - k_{y_2}^2})^2 - k_x^2}\}z}$$

$$\cdots (2-1-14)$$

By substituting z = 0 in expression (2-1-14), a($k_x$, $k_{y1}$, $k_{y2}$, k) is obtained as given by expression (2-1-15) below.
[Math. 32]

$$a(k_x, k_{y_1}, k_{y_2}, k) = \tilde{\varphi}(k_x, k_{y_1}, k_{y_2}, 0, k)$$

$$\cdots (2-1-15)$$

Ultimately,

[Math. 33]

$$\varphi$$

is obtained as given by expression (2-1-16) below.
[Math. 34]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k)$$

$$\cdot e^{i\left\{\sqrt{(\sqrt{k^2-k_{y_1}^2}+\sqrt{k^2-k_{y_2}^2})^2-k_x^2}\right\} z} dk_x dk_{y_1} dk_{y_2}$$

$$\cdots (2-1-16)$$

By applying a limit operation ($y_2 \to y_1 = y$) to expression (2-1-16) on condition that k and z are fixed and integrating the result with respect to k, the imaging function is obtained as given by expression (2-1-17) below.
[Math. 35]

$$\phi(x, y, y, z, k) = \underset{y_2 \to y_1 = y}{Lim} [\phi(x, y, y_2, z, k)]$$

$$= \underset{y_2 \to y_1 = y}{Lim} [\frac{1}{(2\pi)^3} \int_{-\infty}^{\infty} \int_{-\infty}^{\infty} \int_{-\infty}^{\infty} e^{-i(k_x x + k_{y_1} y + k_{y_2} y_2)} a(k_x, k_{y_1}, k_{y_2}, k)$$

$$\cdot e^{i\left\{\sqrt{(\sqrt{k^2-k_{y_1}^2}+\sqrt{k^2-k_{y_2}^2})^2-k_x^2}\right\} z} dk_x dk_{y_1} dk_{y_2}]$$

$$\rho(x, y, z) = \int_0^{\infty} \phi(x, y, y, z, k) dk$$

$$\cdots (2-1-17)$$

As described above, it becomes possible to analytically solve a multistatic inverse scattering problem with a one-dimensional array.

<2-2. Two-dimensional Array>

This section describes the theory for a case pertaining to a two-dimensional array.
FIG. 2 is a conceptual diagram showing the relationship between a transmission point and a reception point in a plane. As shown in FIG. 2, a microwave radiated from point $P_1$ is reflected at point P on a target and received at point $P_2$. Points $P_1$ and $P_2$ move to arbitrary points on a grading (two-dimensional array antenna) in a plane. Under this assumption, there are $n^4$ different microwave paths passing through point P on the target. This large number of paths considerably contributes to an improvement in the quality of an ultimate image. A method for processing such complex data to obtain an image will be described below.

For example, as shown in FIG. 2, the radio wave radiated from point $P_1(x_1, y_1, z)$ is reflected at point $P(\xi, \eta, \zeta)$ and received at point $P_2(x_2, y_2, z)$. When point P is assumed to move in entire region D, a signal received at $P_2$ is expressed by the following expression.

[Math. 36]

$$\phi(x_1, y_1, x_2, y_2, z) = \iiint_D \frac{e^{ik\rho_1}}{\rho_1} \frac{e^{ik\rho_2}}{\rho_2} \varepsilon(\xi, \eta, \zeta) d\xi d\eta d\zeta$$

$$\rho_1 = \sqrt{(x_1 - \xi)^2 + (y_1 - \eta)^2 + (z - \zeta)^2}$$

$$\rho_2 = \sqrt{(x_2 - \xi)^2 + (y_2 - \eta)^2 + (z - \zeta)^2}$$

$$\cdots (2-2-1)$$

It is assumed here that the time factor is proportional to exp(-iωt). The kernel function in the integrand term of the above expression is expressed as given by expression (2-2-2) below.

[Math. 37]

$$\varphi = \frac{e^{ik\rho_1}}{\rho_1} \frac{e^{ik\rho_2}}{\rho_2}$$

$$\cdots (2-2-2)$$

Next, a partial differential equation that has expression (2-2-2) as an asymptotical solution at short wavelengths is examined. Thus, calculation is performed while ignoring a high-order term with respect to 1/ρ obtained as a result of differentiation. Here, an abridged notation for differentiation is defined by expression (2-2-3).

[Math. 38]

$$\frac{\partial}{\partial t} \to \partial_t, \frac{\partial}{\partial x_1} \to \partial_{x_1}, \frac{\partial}{\partial x_2} \to \partial_{x_2}, \frac{\partial}{\partial y_1} \to \partial_{y_1}, \frac{\partial}{\partial y_2} \to \partial_{y_2}, \frac{\partial}{\partial z} \to \partial_z$$

$$\cdots (2-2-3)$$

Using expression (2-2-3), differentiation of each order of the kernel function is expressed as given by expression (2-2-4) below.

[Math. 39]

$$\partial_{x_1} \varphi = ik \frac{x_1 - \xi}{\rho_1} \varphi + o(\rho^{-3}) \qquad \partial_{x_2} \varphi = ik \frac{x_2 - \xi}{\rho_2} \varphi + o(\rho^{-3})$$

$$\partial_{y_1} \varphi = ik \frac{y_1 - \eta}{\rho_1} \varphi + o(\rho^{-3}) \qquad \partial_{y_2} \varphi = ik \frac{y_2 - \eta}{\rho_2} \varphi + o(\rho^{-3})$$

$$\partial_z \varphi = ik(z - \zeta)(\frac{1}{\rho_1} + \frac{1}{\rho_2}) \varphi + o(\rho^{-3})$$

$$\partial_{x_1} \partial_{x_1} \varphi = (ik)^2 \left( \frac{x_1 - \xi}{\rho_1} \right)^2 \varphi + o(\rho^{-3})$$

$$\partial_{y_1} \partial_{y_1} \varphi = (ik)^2 \left( \frac{y_1 - \eta}{\rho_1} \right)^2 \varphi + o(\rho^{-3})$$

$$\partial_{x_2} \partial_{x_2} \varphi = (ik)^2 \left( \frac{x_2 - \xi}{\rho_2} \right)^2 \varphi + o(\rho^{-3})$$

$$\partial_{y_2} \partial_{y_2} \varphi = (ik)^2 \left( \frac{y_2 - \eta}{\rho_2} \right)^2 \varphi + o(\rho^{-3})$$

$$\partial_z \partial_z \varphi = (ik)^2 (z - \zeta)^2 (\frac{1}{\rho_1} + \frac{1}{\rho_2})^2 \varphi + o(\rho^{-3})$$

$$\cdot \cdot \cdot (2 - 2 - 4)$$

Hereinafter, the complexity o(*) is omitted. In accordance with the sum of five differential equations of the second order, expression (2-2-5) below is obtained.
[Math. 40]

$$\Delta_5 \varphi = (\partial_{x_1}{}^2 + \partial_{y_1}{}^2 + \partial_{x_2}{}^2 + \partial_{y_2}{}^2 + \partial_z{}^2) \varphi$$

$$= (ik)^2 \{2 + 2 \frac{(z - \zeta)^2}{\rho_1 \rho_2}\} \varphi$$

$$\cdot \cdot \cdot (2 - 2 - 5)$$

Accordingly, expression (2-2-6) below is obtained from expression (2-2-5).
[Math. 41]

$$\{\Delta_5 - 2(ik)^2\}\varphi = 2(ik)^2 \frac{(z-\xi)^2}{\rho_1\rho_2}\varphi$$

$$= 2(ik)^2 \frac{\rho_1^{\ 2} - (x_1-\xi)^2 - (y_1-\eta)^2}{\rho_1\rho_2}\varphi$$

$$= 2(ik)^2 \frac{\rho_2^{\ 2} - (x_2-\xi)^2 - (y_2-\eta)^2}{\rho_1\rho_2}\varphi$$

$$\cdots (2-2-6)$$

By acting the operation of expression (2-2-6) two times, expression (2-2-7) below is obtained.
[Math. 42]

$$\{\Delta_5 - 2(ik)^2\}^2 \varphi$$

$$= 4(ik)^4 \frac{\{\rho_1^{\ 2} - (x_1-\xi)^2 - (y_1-\eta)^2\}\{\rho_2^{\ 2} - (x_2-\xi)^2 - (y_2-\eta)^2\}}{\rho_1^{\ 2}\rho_2^{\ 2}}\varphi$$

$$= 4(ik)^4\{1 - (ik)^{-2}\partial_{x_1}^{\ 2} - (ik)^{-2}\partial_{y_1}^{\ 2}\}\{1 - (ik)^{-2}\partial_{x_2}^{\ 2} - (ik)^2\partial_{y_2}^{\ 2}\}\varphi$$

$$\cdots (2-2-7)$$

Expression (2-2-7) is summarized to obtain expression (2-2-8) below.
[Math. 43]

$$[\frac{1}{4}\{\Delta_5 - 2(ik)^2\}^2 - (\partial_{x_1}^{\ 2} + \partial_{y_1}^{\ 2})(\partial_{x_2}^{\ 2} + \partial_{y_2}^{\ 2})$$

$$+ (ik)^2(\partial_{x_1}^{\ 2} + \partial_{y_1}^{\ 2} + \partial_{x_2}^{\ 2} + \partial_{y_2}^{\ 2}) - (ik)^4]\varphi = 0$$

$$\cdots (2-2-8)$$

Although expression (2-2-8) is derived assuming a steady state, it is easy to extend expression (2-2-8) to a non-steady state. Thus, variables are substituted as given by expression (2-2-9) below.
[Math. 44]

$$-ik \rightarrow \frac{1}{c}\partial t$$

$$\cdots (2-2-9)$$

By this substitution, expression (2-2-8) is converted into expression (2-2-10) below that includes time.
[Math. 45]

$$\{\Delta_5{}^2 - \frac{4}{c^2}\partial_t{}^2\partial_z{}^2 - 4(\partial_{x_1}{}^2 + \partial_{y_1}{}^2)(\partial_{x_2}{}^2 + \partial_{y_2}{}^2)\}\varphi = 0$$

$$\Delta_5 = \partial_{x_1}{}^2 + \partial_{y_1}{}^2 + \partial_{x_2}{}^2 + \partial_{y_2}{}^2 + \partial_z{}^2$$

$$\cdots (2-2-10)$$

Expression (2-2-10) described above is a partial differential equation that has the kernel function given by expression (2-2-2) as a solution, and φ also satisfies the above-described partial differential equation by applying differentiation to the kernel of expression (2-2-1). This equation is a five-dimensional pseudo wave equation configured by six variables (t, $x_1$, $y_1$, $x_2$, $y_2$, z).

Next, this equation is solved by Fourier transform. First, φ is subjected to multiplex Fourier transform with respect to t, $x_1$, $y_1$, $x_2$, and $y_2$ as given by expression (2-2-11) below.
[Math. 46]

$$\tilde{\phi}(k_{x_1}, k_{y_1}, k_{x_2}, k_{y_2}, z, \omega)$$

$$= \int_{-\infty}^{\infty} e^{i\omega t}dt \int_{-\infty}^{\infty}\int_{-\infty}^{\infty}\int_{-\infty}^{\infty}\int_{-\infty}^{\infty} e^{i(k_{x_1}x_1 + k_{y_1}y_1)}e^{i(k_{x_2}x_2 + k_{y_2}y_2)}\phi(x_1, y_1, x_2, y_2, z, t)dx_1 dy_1 dx_2 dy_2$$

$$\cdots (2-2-11)$$

When the differential with respect to z is expressed as $D_z$, expression (2-2-12) below is obtained from expressions (2-2-10) and (2-2-11).
[Math. 47]

$$\{(D_z{}^2 - k_{x_1}{}^2 - k_{y_1}{}^2 - k_{x_2}{}^2 - k_{y_2}{}^2)^2 + 4k^2 D_z{}^2 - 4(k_{x_1}{}^2 + k_{y_1}{}^2)(k_{x_2}{}^2 + k_{y_2}{}^2)\}\tilde{\phi} = 0$$

$$\cdots (2-2-12)$$

Here, the relationship of ω = ck is used. Four basic solutions to this equation are expressed as given by expression (2-2-13) below.
[Math. 48]

$$E_1 = e^{i\left\{\sqrt{k^2 - k_{x_1}{}^2 - k_{y_1}{}^2} + \sqrt{k^2 - k_{x_2}{}^2 - k_{y_2}{}^2}\right\}z}$$

$$E_2 = e^{-i\left\{\sqrt{k^2 - k_{x_1}{}^2 - k_{y_1}{}^2} + \sqrt{k^2 - k_{x_2}{}^2 - k_{y_2}{}^2}\right\}z}$$

$$E_3 = e^{i\left\{\sqrt{k^2 - k_{x_1}{}^2 - k_{y_1}{}^2} - \sqrt{k^2 - k_{x_2}{}^2 - k_{y_2}{}^2}\right\}z}$$

$$E_4 = e^{-i\left\{\sqrt{k^2 - k_{x_1}{}^2 - k_{y_1}{}^2} - \sqrt{k^2 - k_{x_2}{}^2 - k_{y_2}{}^2}\right\}z}$$

$$\cdots (2-2-13)$$

Considering the facts that the time factor is $e^{-i\omega t}$, the phase is added using the path of radiated radio waves, and radio waves reflected off the object are bounced off toward a measurement plane, $E_1$ is the unique meaningful solution. Accordingly, expression (2-2-14) below is obtained.
[Math. 49]

$$\tilde{\phi}(k_{x_1},k_{y_1},k_{x_2},k_{y_2},z,k)=a(k_{x_1},k_{y_1},k_{x_2},k_{y_2},k)e^{i\left\{\sqrt{k^2-k_{x_1}{}^2-k_{y_1}{}^2}+\sqrt{k^2-k_{x_2}{}^2-k_{y_2}{}^2}\right\}z}$$

$$\cdots(2-2-1\,4)$$

By substituting z = 0 in expression (2-2-14), a($k_{x1}$, $k_{y1}$, $k_{x2}$, $k_{y2}$, k) is obtained as given by expression (2-2-15) below.
[Math. 50]

$$a(k_{x_1},k_{y_1},k_{x_2},k_{y_2},k)=\tilde{\phi}(k_{x_1},k_{y_1},k_{x_2},k_{y_2},0,k)$$

$$\cdots(2-2-1\,5)$$

From the above, φ is obtained as given by expression (2-2-16) below.
[Math. 51]

$$\phi(x_1,y_1,x_2,y_2,z,k)$$
$$=\frac{1}{(2\pi)^4}\int_{-\infty}^{\infty}\int_{-\infty}^{\infty}\int_{-\infty}^{\infty}\int_{-\infty}^{\infty}e^{-i(k_{x_1}x_1+k_{y_1}y_1)}e^{-i(k_{x_2}x_2+k_{y_2}y_2)}e^{i\left(\sqrt{k^2-k_{x_1}{}^2-k_{y_1}{}^2}+\sqrt{k^2-k_{x_2}{}^2-k_{y_2}{}^2}\right)z}$$
$$\cdot a(k_{x_1},k_{y_1},k_{x_2},k_{y_2},k)dk_{x_1}dk_{y_1}dk_{x_2}dk_{y_2}$$

$$\cdots(2-2-1\,6)$$

Next, under the condition where k and z are fixed, by applying a limit operation ($y_1{\rightarrow}y$ and $y_2{\rightarrow}y$) to expression (2-2-16), we obtain the expression (2-2-17).
[Math. 52]

$$\Phi(x,y,z,k)=\phi(x,y,x,y,z,k)$$
$$=\underset{\substack{x_2\rightarrow x_1=x\\y_2\rightarrow y_1=y}}{Lim}[\phi(x_1,y_1,x_2,y_2,z,k)]$$
$$=\underset{\substack{x_2\rightarrow x_1=x\\y_2\rightarrow y_1=y}}{Lim}[\frac{1}{(2\pi)^4}\int_{-\infty}^{\infty}\int_{-\infty}^{\infty}\int_{-\infty}^{\infty}\int_{-\infty}^{\infty}e^{-i(k_{x_1}x_1+k_{y_1}y_1)}e^{-i(k_{x_2}x_2+k_{y_2}y_2)}e^{iz\left(\sqrt{k^2-k_{x_1}{}^2-k_{y_1}{}^2}+\sqrt{k^2-k_{x_2}{}^2-k_{y_2}{}^2}\right)}$$
$$\cdot a(k_{x_1},k_{y_1},k_{x_2},k_{y_2},k)dk_{x_1}dk_{y_1}dk_{x_2}dk_{y_2}]$$

$$\cdots(2-2-1\,7)$$

Next, expression (2-2-17) is integrated with respect to k to obtain expression (2-2-18) below as an imaging function.
[Math. 53]

$$\rho(x,y,z) = \int_0^\infty \Phi(x,y,z,k)dk = \int_0^\infty \phi(x,y,x,y,z,k)dk$$

$$= \lim_{\substack{x_2 \to x_1 = x \\ y_2 \to y_1 = y}} [\int_0^\infty \phi(x_1,y_1,x_2,y_2,z,k)dk]$$

$$= \lim_{\substack{x_2 \to x_1 = x \\ y_2 \to y_1 = y}} [\frac{1}{(2\pi)^4}\int_0^\infty\int_{-\infty}^\infty\int_{-\infty}^\infty\int_{-\infty}^\infty\int_{-\infty}^\infty e^{-i(k_{x_1}x_1+k_{y_1}y_1)}e^{-i(k_{x_2}x_2+k_{y_2}y_2)}e^{iz\left(\sqrt{k^2-k_{x_1}^2-k_{y_1}^2}+\sqrt{k^2-k_{x_2}^2-k_{y_2}^2}\right)}$$

$$\cdot a(k_{x_1},k_{y_1},k_{x_2},k_{y_2},k)dk_{x_1}dk_{y_1}dk_{x_2}dk_{y_2}dk]$$

$$\cdots (2-2-18)$$

In expression (2-2-18), the integration with respect to $k_{x1}$, $k_{y1}$, $k_{x2}$, and $k_{y2}$ are in the form of Fourier transform and suitable for processing performed by a calculator. On the other hand, the term exp(iz...) of the integrand is not in the form of Fourier transform. Thus, ordinary integration is done with respect to k while specifying, for example, the value of z. Alternatively, in order to reduce the calculation time, expression (2-2-18) may be modified so as to express the whole by only Fourier transform.

For example, the coefficient of iz in the term exp(iz...) of expression (2-2-17) is expressed by expression (2-2-19) below using new variable u.

[Math. 54]

$$u = \sqrt{k^2 - k_{x_1}^2 - k_{y_1}^2} + \sqrt{k^2 - k_{x_2}^2 - k_{y_2}^2}$$

$$\cdots (2-2-19)$$

By rationalizing the right-hand side of expression (2-2-19), expression (2-2-20) below is obtained.

[Math. 55]

$$\frac{k_{x_2}^2 + k_{y_2}^2 - k_{x_1}^2 - k_{y_1}^2}{u} = \sqrt{k^2 - k_{x_1}^2 - k_{y_1}^2} - \sqrt{k^2 - k_{x_2}^2 - k_{y_2}^2}$$

$$\cdots (2-2-20)$$

By solving each square root from the two expressions including expressions (2-2-19) and (2-2-20), expression (2-2-21) below is obtained.

[Math. 56]

$$2\sqrt{k^2 - k_{x_1}^2 - k_{y_1}^2} = u + \frac{k_{x_2}^2 + k_{y_2}^2 - k_{x_1}^2 - k_{y1}^2}{u}$$

$$2\sqrt{k^2 - k_{x_2}^2 - k_{y_2}^2} = u - \frac{k_{x_2}^2 + k_{y_2}^2 - k_{x_1}^2 - k_{y1}^2}{u}$$

$$\cdots (2-2-21)$$

Accordingly, k is expressed as given by expression (2-2-22) below.

[Math. 57]

$$k = \frac{1}{2}\sqrt{u^2 + \frac{(k_{x_2}{}^2 + k_{y_2}{}^2 - k_{x_1}{}^2 - k_{y_1}{}^2)^2}{u^2} + 2(k_{x_2}{}^2 + k_{y_2}{}^2 + k_{x_1}{}^2 + k_{y_1}{}^2)}$$

$$\cdots (2-2-2\,2)$$

Next, expression (2-2-23) below is obtained by differentiation of both sides of expression (2-2-19) with respect to k and u.
[Math. 58]

$$du = kdk\left(\frac{1}{\sqrt{k^2 - k_{x_1}{}^2 - k_{y_1}{}^2}} + \frac{1}{\sqrt{k^2 - k_{x_2}{}^2 - k_{y_2}{}^2}}\right)$$

$$\cdots (2-2-2\,3)$$

By solving dk from expression (2-2-23), expression (2-2-24) below is obtained.
[Math. 59]

$$dk = \frac{1}{k\,u}\sqrt{k^2 - k_{x_1}{}^2 - k_{y_1}{}^2}\sqrt{k^2 - k_{x_2}{}^2 - k_{y_2}{}^2}\,du$$

$$\cdots (2-2-2\,4)$$

At last in summary, expression (2-2-18) is converted as given by expression (2-2-25) below.
[Math. 60]

$$\rho(x,y,z) = \int_0^\infty \Phi(x,y,z,k)dk = \int_0^\infty \phi(x,y,x,y,z,k)dk$$

$$= \lim_{\substack{x_2 \to x_1 = x \\ y_2 \to y_1 = y}} [\int_0^\infty \phi(x_1,y_{1,}x_2,y_2,z,k)dk]$$

$$= \lim_{\substack{x_2 \to x_1 = x \\ y_2 \to y_1 = y}} [\frac{1}{(2\pi)^4}\int_0^\infty\int_{-\infty}^\infty\int_{-\infty}^\infty\int_{-\infty}^\infty\int_{-\infty}^\infty e^{-i(k_{x_1}x_1 + k_{y_1}y_1)}e^{-i(k_{x_2}x_2 + k_{y_2}y_2)}e^{izu}$$

$$\cdot\, a(k_{x_1},k_{y_1},k_{x_2},k_{y_2},k)dk_{x_1}dk_{y_1}dk_{x_2}dk_{y_2}dk]$$

$$\cdots (2-2-2\,5)$$

<2-3. Semi-two-dimensional Array>

FIG. 3 is a conceptual diagram showing an example of coordinates relating to a semi-two-dimensional array antenna. In this example, the semi-two-dimensional array antenna is configured by two linear array antennas including single-row transmitting array antenna TA and single-row receiving array antenna RA. Such a semi-two-dimensional array antenna is also referred to as an S-Array (super-array) or an S-Array multistatic antenna.

Transmitting array antenna TA includes n transmitting antenna elements T. Receiving array antenna RA includes n receiving antenna elements R. The x coordinate of transmitting array antenna TA is expressed as $x_1$, the x coordinate of receiving array antenna RA is expressed as $x_2$, and the distance in the x-axis direction between transmitting array antenna TA and receiving array antenna RA is expressed as d. This configuration is capable of obtaining $n^2$ sets of time-series data, each being an arbitrary combination of n transmitting antenna elements and n receiving antenna elements at each point x in the scanning direction.

This section describes the theory for imaging an object from data obtained by a semi-two-dimensional array antenna as illustrated in FIG. 3. First, expression (2-2-10) relating to a two-dimensional array is used as the starting point for examination. Expression (2-3-1) below is the same as expression (2-2-10).

[Math. 61]

$$\{\Delta_5{}^2 - \frac{4}{c^2}\partial_t{}^2\partial_z{}^2 - 4(\partial_{x_1}{}^2 + \partial_{y_1}{}^2)(\partial_{x_2}{}^2 + \partial_{y_2}{}^2)\}\varphi = 0$$

$$\Delta_5 = \partial_{x_1}{}^2 + \partial_{y_1}{}^2 + \partial_{x_2}{}^2 + \partial_{y_2} + \partial_z{}^2$$

$$\cdots (2-3-1)$$

Also,

[Math. 62]

$$\varphi$$

with respect to t, $x_1$, $y_1$, and $y_2$ is expressed as given by expression (2-3-2) below.

[Math. 63]

$$\tilde{\varphi}(k_{x_1}, k_{y_1}, x_2, k_{y_2}, z, k)$$

$$= \int_{-\infty}^{\infty} e^{ickt}dt \int_{-\infty}^{\infty}\int_{-\infty}^{\infty}\int_{-\infty}^{\infty} e^{i(k_{x_1}x_1 + k_{y_1}y_1 + k_{y_2}y_2)}\varphi(x_1, y_1, x_2, y_2, z, t)dx_1 dy_1 dy_2$$

$$\cdots (2-3-2)$$

In the following description, variable $x_2$ is expressed as u. Expression (2-3-3) below is obtained by Fourier transform of both sides of expression (2-3-1) with respect to t, $x_1$, $y_1$, and $y_2$.

[Math. 64]

$$\left\{\left(\partial_u{}^2 + \partial_z{}^2 - k_{x_1}{}^2 - k_{y_1}{}^2 - k_{y_2}{}^2\right)^2 + 4k^2\partial_z{}^2 + 4(k_{x_1}{}^2 + k_{y_1}{}^2)(\partial_u{}^2 - k_{y_2}{}^2)\right\}\tilde{\varphi} = 0$$

$$\cdots (2-3-3)$$

A solution to expression (2-3-3) described above, which is the two-dimensional partial differential equation with respect to u and z, is assumed as given by expression (2-3-4) below.

[Math. 65]

$$\tilde{\varphi} \propto e^{s_3 u}e^{s_4 z}$$

$$\cdots (2-3-4)$$

Here, $s_3$ and $s_4$ are functions with respect to $k_{x1}$, $k_{y1}$, $k_{y2}$, and k as given by expression (2-3-5) below. In other

words, $s_3$ and $s_4$ are constants defined by $k_{x1}$, $k_{y1}$, $k_{y2}$, and k.
[Math. 66]

$$s_3 = s_3(k_{x_1}, k_{y_1}, k_{y_2}, k)$$

$$s_4 = s_4(k_{x_1}, k_{y_1}, k_{y_2}, k)$$

$$\cdots (2-3-5)$$

By substituting expression (2-3-4) in expression (2-3-3), expression (2-3-6) below is obtained.
[Math. 67]

$$\left(s_3{}^2 + s_4{}^2 - k_{x_1}{}^2 - k_{y_1}{}^2 - k_{y_2}{}^2\right)^2 + 4k^2 s_4{}^2 + 4(k_{x_1}{}^2 + k_{y_1}{}^2)(s_3{}^2 - k_{y_2}{}^2) = 0$$

$$\cdots (2-3-6)$$

However, $s_3$ and $s_4$ cannot be determined from only this algebraic equation. Next, expression (2-3-4) is changed into expression (2-3-7) below.
[Math. 68]

$$\tilde{\varphi}(k_{x_1}, k_{y_1}, u, k_{y_2}, z, k) = b(k_{x_1}, k_{y_1}, k_{y_2}, k)e^{s_3 u}e^{s_4 z}$$

$$\cdots (2-3-7)$$

By inverse Fourier transform of expression (2-3-7) with respect to $k_{x1}$, $k_{y1}$, and $k_{y2}$ and application of the result to u→$x_2$, expression (2-3-8) below is obtained.
[Math. 69]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} b(k_{x_1}, k_{y_1}, k_{y_2}, k)e^{s_3 x_2}e^{s_4 z} dk_{x_1} dk_{y_1} dk_{y_2}$$

$$\cdots (2-3-8)$$

By applying $x_2 = x_1 = x$ to expression (2-3-8), expression (2-3-9) below is obtained.
[Math. 70]

$$\varphi(x, y_1, x, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x + k_{y_1}y_1 + k_{y_2}y_2)} b(k_{x_1}, k_{y_1}, k_{y_2}, k) e^{s_3 x} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i\{(k_{x_1} + is_3)x + k_{y_1}y_1 + k_{y_2}y_2\}} b(k_{x_1}, k_{y_1}, k_{y_2}, k) e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_x x + k_{y_1}y_1 + k_{y_2}y_2)} b(k_{x_1}, k_{y_1}, k_{y_2}, k) e^{s_4 z} \left( \frac{dk_{x_1}}{dk_x} \right) dk_x dk_{y_1} dk_{y_2}$$

$$\cdots (2-3-9)$$

Here, $k_x$ is expressed as given by expression (2-3-10) below.
[Math. 71]

$$k_x = k_{x_1} + is_3$$

$$\cdots (2-3-10)$$

Expression (2-3-9) described above is supposed to agree with expression (2-1-16) because it agrees with the solution to the scattering field equation for the one-dimensional array. Expression (2-3-11) below is the same as expression (2-1-16).
[Math. 72]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1}y_1 + k_{y_2}y_2)} a(k_x, k_{y_1}, k_{y_2}, k)$$

$$\cdot e^{i\{\sqrt{(\sqrt{k^2 - k_{y_1}^2} + \sqrt{k^2 - k_{y_2}^2})^2 - k_x^2}\}z} dk_x dk_{y_1} dk_{y_2}$$

$$\cdots (2-3-11)$$

By comparing expressions (2-3-9) and (2-3-11), expression (2-3-12) below is obtained.
[Math. 73]

$$b(k_{x_1}, k_{y_1}, k_{y_2}, k) \left( \frac{dk_{x_1}}{d(k_{x_1} + is_3)} \right) = a(k_{x_1} + is_3, k_{y_1}, k_{y_2}, k)$$

$$s_4 = i\sqrt{(\sqrt{k^2 - k_{y_1}^2} + \sqrt{k^2 - k_{y_2}^2})^2 - (k_{x_1} + is_3)^2}$$

$$\cdots (2-3-12)$$

The second equation given by expression (2-3-12) is raised to second power to obtain expression (2-3-13) below.
[Math. 74]

$$s_4{}^2 + s_3{}^2 = 2ik_{x_1}s_3 + k_{x_1}{}^2 - \left(\sqrt{k^2 - k_{y_1}{}^2} + \sqrt{k^2 - k_{y_2}{}^2}\right)^2$$

$$\cdots (2-3-13)$$

By substituting expression (2-3-13) in expression (2-3-6), expression (2-3-14) below is obtained.
[Math. 75]

$$\left\{2ik_{x_1}s_3 - k_{y_1}{}^2 - k_{y_2}{}^2 - \left(\sqrt{k^2 - k_{y_1}{}^2} + \sqrt{k^2 - k_{y_2}{}^2}\right)^2\right\}^2$$

$$+4k^2\left\{-\left(\sqrt{k^2 - k_{y_1}{}^2} + \sqrt{k^2 - k_{y_2}{}^2}\right)^2 + (k_{x_1} + is_3)^2\right\}$$

$$+4(k_{x_1}{}^2 + k_{y_1}{}^2)(s_3{}^2 - k_{y_2}{}^2) = 0$$

$$\cdots (2-3-14)$$

Expression (2-3-14) is summarized to obtain expression (2-3-15) below.
[Math. 76]

$$(k^2 - k_{y_1}{}^2)s_3{}^2 + 2\left(ik_{x_1}\sqrt{k^2 - k_{y_1}{}^2}\sqrt{k^2 - k_{y_2}{}^2}\right)s_3 - k_{x_1}{}^2(k^2 - k_{y_2}{}^2) = 0$$

$$\cdots (2-3-15)$$

Since the solution to this equation is a multiple root, the solution expressed as given by expression (2-3-16) is uniquely obtained.
[Math. 77]

$$s_3 = \frac{-ik_{x_1}\sqrt{k^2 - k_{y_2}{}^2}}{\sqrt{k^2 - k_{y_1}{}^2}}$$

$$\cdots (2-3-16)$$

In accordance with expressions (2-3-12) and (2-3-16) obtained through the above-described above, $s_3$ and $s_4$ are obtained analytically. Then, the scattering field function is obtained from expression (2-3-8) as expressed by expression (2-3-17) below.
[Math. 78]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} b(k_{x_1}, k_{y_1}, k_{y_2}, k) e^{s_3 x_2} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot \left( \frac{d(k_{x_1} + is_3)}{dk_{x_1}} \right) e^{s_3 x_2} e^{s_4 z} dk_{x_1} dk_{y_1} dk_{y_2}$$

$$s_3 = \frac{-i k_{x_1} \sqrt{k^2 - k_{y_2}^2}}{\sqrt{k^2 - k_{y_1}^2}}$$

$$s_4 = i\sqrt{(\sqrt{k^2 - k_{y_1}^2} + \sqrt{k^2 - k_{y_2}^2})^2 - (k_{x_1} + is_3)^2}$$

$$\cdots (2-3-1\,7)$$

Next, connecting measurement data $\Phi(x_1, y_1,$ and $y_2, k)$ with $a(k_{x1}, k_{y1}, k_{y2}, k)$ is examined. By defining $k_x = k_{x1} + is_3$ and substituting $z = 0$ and $x_2 = x_1 + d$ in expression (2-3-17), an equation as given by expression (2-3-18) holds true. Here, $\Phi(x_1, y_1,$ and $y_2, k)$ represents measurement data on transmission point $(x_1, y_1, 0)$, reception point $(x_1+d, y_2, 0)$, and wavenumber k.

[Math. 79]

$$\Phi(x_1, y_1, y_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot \left( \frac{d(k_{x_1} + is_3)}{dk_{x_1}} \right) e^{s_3(x_1+d)} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i\{(k_{x_1} + is_3)x_1 + k_{y_1}y_1 + k_{y_2}y_2\}} a(k_{x_1} + is_3, k_{y_1}, k_{y_2}, k)$$

$$\cdot \left( \frac{d(k_{x_1} + is_3)}{dk_{x_1}} \right) e^{s_3 d} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_x x_1 + k_{y_1}y_1 + k_{y_2}y_2)} a(k_x, k_{y_1}, k_{y_2}, k) e^{s_3 d} dk_x dk_{y_1} dk_{y_2}$$

$$\cdots (2-3-18)$$

Hereinafter, $k_x$ and $s_3$ defined by expression (2-3-19) below are used.
[Math. 80]

$$k_x = k_{x_1} + is_3$$

$$s_3 = \frac{-i k_{x_1} \sqrt{k^2 - k_{y_2}^2}}{\sqrt{k^2 - k_{y_1}^2}} = \frac{-i k_x \sqrt{k^2 - k_{y_2}^2}}{\sqrt{k^2 - k_{y_1}^2} + \sqrt{k^2 - k_{y_2}^2}}$$

$$\cdots (2-3-19)$$

Expression (2-3-20) below is obtained by Fourier transform of both sides of expression (2-3-18) with respect to $x_1$, $y_1$, and $y_2$.
[Math. 81]

$$\tilde{\Phi}(k_x{'}, k_{y_1}{'}, k_{y_2}{'}, k)$$

$$= \int_{-\infty}^{\infty} \int_{-\infty}^{\infty} \int_{-\infty}^{\infty} e^{i\left(k_x{'}x_1 + k_{y_1}{'}y_1 + k_{y_2}{'}y_2\right)} \Phi(x_1, y_1, y_2, k) dx_1 dy_1 dy_2$$

$$= \frac{1}{(2\pi)^3} \int_{-\infty}^{\infty} \int_{-\infty}^{\infty} \int_{-\infty}^{\infty} e^{i\left(k_x{'}x_1 + k_{y_1}{'}y_1 + k_{y_2}{'}y_2\right)}$$

$$\cdot \int_{-\infty}^{\infty} \int_{-\infty}^{\infty} \int_{-\infty}^{\infty} e^{-i\left\{(k_x x_1 + k_{y_1} y_1 + k_{y_2} y_2)\right\}} a(k_x, k_{y_1}, k_{y_2}, k) e^{s_3 d} dk_x dk_{y_1} dk_{y_2} dx_1 dy_1 dy_2$$

$$= \int_{-\infty}^{\infty} \int_{-\infty}^{\infty} \int_{-\infty}^{\infty} \delta(k_x{'} - k_x) \delta(k_{y_1}{'} - k_{y_1}) \delta(k_{y_2}{'} - k_{y_2}) a(k_x, k_{y_1}, k_{y_2}, k) e^{s_3 d} dk_x dk_{y_1} dk_{y_2}$$

$$= a\left(k_x{'}, k_{y_1}{'}, k_{y_2}{'}, k\right) e^{s_3{'} d}$$

$$\cdots (2-3-20)$$

Function $a(k_x, k_{y1}, k_{y2}, k)$ is obtained from expression (2-3-20) as given by expression (2-3-21).
[Math. 82]

$$a\left(k_x, k_{y_1}, k_{y_2}, k\right) = e^{-s_3 d} \tilde{\Phi}(k_x, k_{y_1}, k_{y_2}, k)$$

$$= e^{\frac{i k_x d \sqrt{k^2 - k_{y_2}{}^2}}{\sqrt{k^2 - k_{y_1}{}^2} + \sqrt{k^2 - k_{y_2}{}^2}}} \tilde{\Phi}(k_x, k_{y_1}, k_{y_2}, k)$$

$$\cdots (2-3-21)$$

Therefore, expression (2-3-17) that represents the scattering field function is obtained in a complete form as given by expression (2-3-22) below.
[Math. 83]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} a(k_{x_1} + is_3, k_{y_1}, k_{y_2}, k)$$

$$\cdot \left( \frac{d(k_{x_1} + is_3)}{dk_{x_1}} \right) e^{s_3 x_2} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} e^{s_3 x_2} e^{s_4 z} e^{\frac{i d(k_{x_1} + is_3)\sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k) \left( \frac{d(k_{x_1} + is_3)}{dk_{x_1}} \right) dk_{x_1} dk_{y_1} dk_{y_2}$$

$$s_3 = \frac{-i k_{x_1} \sqrt{k^2 - k_{y_2}^2}}{\sqrt{k^2 - k_{y_1}^2}} = \frac{-i k_x \sqrt{k^2 - k_{y_2}^2}}{\sqrt{k^2 - k_{y_1}^2} + \sqrt{k^2 - k_{y_2}^2}}$$

$$s_4 = i k_z = i\sqrt{(\sqrt{k^2 - k_{y_1}^2} + \sqrt{k^2 - k_{y_2}^2})^2 - (k_{x_1} + is_3)^2}$$

$$\cdots (2-3-22)$$

Then, the imaging function is obtained as given by expression (2-3-23) below.
[Math. 84]

$$\rho(x,y,z)$$

$$= \int_0^\infty \lim_{\substack{x_2 \to x_1 = x \\ y_2 \to y_1 = y}} \varphi(x_1, y_1, x_2, y_2, z, k)dk$$

$$= \frac{1}{(2\pi)^3} \int_0^\infty dk \int_{-\infty}^\infty \int_{-\infty}^\infty \int_{-\infty}^\infty e^{-i(k_x x + k_{y_1} y + k_{y_2} y)} e^{s_4 z} e^{\frac{i d k_x \sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k)dk_x dk_{y_1} dk_{y_2}$$

$$= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)} e^{i k_z z} e^{\frac{i d k_x \sqrt{k^2 - k_{y_2}^2}}{\sqrt{k^2 - k_{y_1}^2} + \sqrt{k^2 - k_{y_2}^2}}}$$

$$\cdot \tilde{\Phi}(k_x, k_{y_1}, k_{y_2}, k)\left(\frac{dk}{dk_z}\right) dk_x dk_{y_1} dk_{y_2} dk_z$$

$$k_z = \sqrt{(\sqrt{k^2 - k_{y_1}^2} + \sqrt{k^2 - k_{y_2}^2})^2 - k_x^2}$$

$$k = \frac{1}{2}\sqrt{k_x^2 + k_z^2 + 2(k_{y_1}^2 + k_{y_2}^2) + \frac{(k_{y_1}^2 - k_{y_2}^2)^2}{k_x^2 + k_z^2}}$$

$$\frac{dk}{dk_z} = \frac{k_z \sqrt{k^2 - k_{y_1}^2} \sqrt{k^2 - k_{y_2}^2}}{k(k_x^2 + k_z^2)}$$

$$\cdot \cdot \cdot (2-3-23)$$

Moreover, as compared with the one-dimensional array, the semi-two-dimensional array is capable of including a larger number of transmitting elements and a larger number of receiving elements. Accordingly, it is possible to more efficiently acquire information.

<3. Scattering Field Theory With Consideration of Object Movement>

In this chapter, a scattering field theory that takes the movement of the object into consideration will be described. In particular, a scattering field theory for imaging a flying object moving in the atmosphere is described.

For example, first, based on the scattering field theory that does not take the movement of the object into consideration, provisional imaging functions are derived at constant time intervals. The velocity of the object is derived based on the provisional imaging functions derived at constant time intervals. The imaging function is derived based on the scattering field theory that takes into consideration the movement of the object, specifically the velocity of the object.

<3-1. Velocity Analysis of Flying Object>

FIG. 4 is a conceptual diagram illustrating the relationship between a plurality of transmitters, a plurality of receivers, and a flying object. The x-axis direction and y-axis direction correspond to the horizontal direction, and the z-axis direction corresponds to the vertical direction. The measurement data obtained using a plurality of transmitters ($T_0, ..., T_N$)

and a plurality of receivers ($R_0$, ..., $R_N$) is expressed as follows.

[Math. 85]

$$\varphi(\tau, x, y_1, y_2, t)$$

Here, t represents the real time. $\tau$ is a time unit corresponding to the number of data collections. More specifically, when the transmission-reception time of the wave is expressed as $\Delta t$, $t = \tau \Delta H$ holds true. Accordingly, $\tau$ can represent time. In this section, distance d between the transmission and reception arrays is assumed to be 0 (d=0). The transmitting array antenna and the receiving array antenna are arranged along the y-axis and do not move or scan, so the measurement data does not depend on x.

Therefore, the measurement data is newly expressed as follows.

[Math. 86]

$$\varphi(\tau, y_1, y_2, t)$$

By inserting the above $\tau$ into the imaging function of expression (2-1-17), the imaging function of expression (3-1-1) below is obtained.

[Math. 87]

$$\rho(\tau, x, y, z) = \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)} a(\tau, k_x, k_{y_1}, k_{y_2}, k)$$

$$\cdot e^{ik_z z} \left( \frac{dk}{dk_z} \right) dk_x \, dk_{y_1} \, dk_{y_2} \, dk_z$$

$$a(\tau, k_x, k_{y_1}, k_{y_2}, k) = \tilde{\varphi}(\tau, k_{y_1}, k_{y_2}, k)$$

$$\frac{dk}{dk_z} = \frac{k_z \sqrt{k^2 - k_{y_1}^2} \sqrt{k^2 - k_{y_2}^2}}{k(k_x^2 + k_z^2)}$$

$$\cdots (3 - 1 - 1)$$

The imaging function of expression (3-1-1) above is an imaging function obtained by a scattering field theory that does not take the movement of the object into consideration, and depends on T.

To calculate the velocity of the object from $\rho(\tau, x, y, z)$, a Lagrangian derivative is used. The Lagrangian derivative is defined by expression (3-1-2) below.

[Math. 88]

$$\frac{D}{D\tau} = \frac{\partial}{\partial \tau} + \mathbf{V} \cdot \nabla = \frac{\partial}{\partial \tau} + v_x \frac{\partial}{\partial x} + v_y \frac{\partial}{\partial y} + v_z \frac{\partial}{\partial z}$$

$$\cdots (3 - 1 - 2)$$

In expression (3-1-2), V represents the velocity vector ($v_x$, $v_y$, $v_z$) of the incompressible flow field in (x, y, z) space. V can be considered a function of (x, y, z). However, since only the flying object has velocity, when there is only one flying object, V is assumed to be constant in space and assumed to depend on time $\tau$. When there are a plurality of flying objects, V is not constant in space, but is constant in the vicinity of each flying object. From this condition, the imaging function is subject to the condition given by expression (3-1-3) below.
[Math. 89]

$$\frac{D}{D\tau}\rho(\tau, x, y, z) = 0$$

$$\cdots (3-1-3)$$

When V = $(v_x, v_y, v_z)$ is constant in space, the velocity of the flying object is derived as $(v_x, v_y, v_z)$ satisfying expression (3-1-3). However, when $\rho(\tau, x, y, z)$ is 0, $(v_x, v_y, v_z)$ cannot be determined from expression (3-1-3). Therefore, the velocity of the flying object is determined based on expression (3-1-4).
[Math. 90]

$$\operatorname*{Min}_{(v_x, v_y, v_z)} \left[ \iiint \left| \left( \frac{\partial}{\partial \tau} + v_x \frac{\partial}{\partial x} + v_y \frac{\partial}{\partial y} + v_z \frac{\partial}{\partial z} \right) \rho(\tau, x, y, z) \right|^2 dxdydz \right.$$

$$\left. + \varepsilon(v_x^2 + v_y^2 + v_z^2) \right]$$

$$\cdots (3-1-4)$$

Here, $\varepsilon$ is a positive number. Expression (3-1-4) is a quadratic equation with respect to $(v_x, v_y, v_z)$, and since the coefficients are positive, a minimum value necessarily exists. Furthermore, term $\varepsilon$ is provided to prevent $(v_x, v_y, v_z)$ from reaching a minimum value at an arbitrary value when $\rho(\tau, x, y, z)$ is 0. When $\rho(\tau, x, y, z)$ is 0, $(v_x, v_y, v_z)$ is derived as $(0, 0, 0)$ due to the term $\varepsilon$. To avoid errors based on the $\varepsilon$ term, it is preferable that the value of $\varepsilon$ be small.

From expression (3-1-4), in order to derive $(v_x, v_y, v_z)$, first, a Fourier transform is performed on $\rho(\tau, x, y, z)$, and expression (3-1-5) below is obtained.
[Math. 91]

$$\rho(\tau, x, y, z) = \frac{1}{(2\pi)^3} \int_{-\infty}^{\infty} \int_{-\infty}^{\infty} \int_{-\infty}^{\infty} e^{-i(k_x x + k_y y - k_z z)} \rho_k(\tau, k_x, k_y, k_z) dk_x dk_y dk_z$$

$$\cdots (3-1-5)$$

By substituting expression (3-1-5) in expression (3-1-3), expression (3-1-6) below is obtained.
[Math. 92]

$$\left( \frac{\partial}{\partial \tau} + v_x \frac{\partial}{\partial x} + v_y \frac{\partial}{\partial y} + v_z \frac{\partial}{\partial z} \right) \rho(\tau, x, y, z)$$

$$= \frac{1}{(2\pi)^3} \int_{-\infty}^{\infty} \int_{-\infty}^{\infty} \int_{-\infty}^{\infty} e^{-i(k_x x + k_y y - k_z z)} \left\{ \partial_\tau - ik_x v_x - ik_y v_y + ik_z v_z \right\}$$

$$\cdot \rho_k(\tau, k_x, k_y, k_z) dk_x dk_y dk_z$$

$$\cdots (3-1-6)$$

The function appearing on the right-hand side of expression (3-1-6) will be written as follows for convenience.
[Math. 93]

$$A(\tau,x,y,z) = \frac{-i}{(2\pi)^3} \int_{-\infty}^{\infty}\int_{-\infty}^{\infty}\int_{-\infty}^{\infty} e^{-i(k_x x + k_y y - k_z z)} k_x \rho_k(\tau,k_x,k_y,k_z)\,dk_x\,dk_y\,dk_z$$

$$B(\tau,x,y,z) = \frac{-i}{(2\pi)^3} \int_{-\infty}^{\infty}\int_{-\infty}^{\infty}\int_{-\infty}^{\infty} e^{-i(k_x x + k_y y - k_z z)} k_y \rho_k(\tau,k_x,k_y,k_z)\,dk_x\,dk_y\,dk_z$$

$$C(\tau,x,y,z) = \frac{i}{(2\pi)^3} \int_{-\infty}^{\infty}\int_{-\infty}^{\infty}\int_{-\infty}^{\infty} e^{-i(k_x x + k_y y - k_z z)} k_z \rho_k(\tau,k_x,k_y,k_z)\,dk_x\,dk_y\,dk_z$$

$$D(\tau,x,y,z) = \frac{1}{(2\pi)^3} \int_{-\infty}^{\infty}\int_{-\infty}^{\infty}\int_{-\infty}^{\infty} e^{-i(k_x x + k_y y - k_z z)} \partial_\tau \rho_k(\tau,k_x,k_y,k_z)\,dk_x\,dk_y\,dk_z$$

$$\cdots (3-1-7)$$

Using the symbols in expression (3-1-7), expression (3-1-6) can be expressed as given by expression (3-1-8) below.
[Math. 94]

$$\left(\frac{\partial}{\partial \tau} + v_x \frac{\partial}{\partial x} + v_y \frac{\partial}{\partial y} + v_z \frac{\partial}{\partial z}\right) \rho(\tau,x,y,z)$$

$$= D(\tau,x,y,z) + v_x A(\tau,x,y,z) + v_y B(\tau,x,y,z) + v_z C(\tau,x,y,z)$$

$$\cdots (3-1-8)$$

By evaluating expression (3-1-8) as the expression inside the absolute value symbols of expression (3-1-4) in order to actually calculate expression (3-1-4), expression (3-1-9) below is obtained.
[Math. 95]

$$\iiint \left| \left( \frac{\partial}{\partial \tau} + v_x \frac{\partial}{\partial x} + v_y \frac{\partial}{\partial y} + v_z \frac{\partial}{\partial z} \right) \rho(\tau, x, y, z) \right|^2 dxdydz$$

$$= \iiint \left| D(\tau, x, y, z) + v_x A(\tau, x, y, z) + v_y B(\tau, x, y, z) + v_z C(\tau, x, y, z) \right|^2 dxdydz$$

$$= v_x^2 \iiint A(\tau, x, y, z) \overline{A}(\tau, x, y, z) d\mathbf{r}^3$$

$$+ v_y^2 \iiint B(\tau, x, y, z) \overline{B}(\tau, x, y, z) d\mathbf{r}^3$$

$$+ v_z^2 \iiint C(\tau, x, y, z) \overline{C}(\tau, x, y, z) d\mathbf{r}^3$$

$$+ \iiint D(\tau, x, y, z) \overline{D}(\tau, x, y, z) d\mathbf{r}^3$$

$$+ v_x v_y \iiint \left\{ A(\tau, x, y, z) \overline{B}(\tau, x, y, z) + cc. \right\} d\mathbf{r}^3$$

$$+ v_y v_z \iiint \left\{ B(\tau, x, y, z) \overline{C}(\tau, x, y, z) + cc. \right\} d\mathbf{r}^3$$

$$+ v_z v_x \iiint \left\{ C(\tau, x, y, z) \overline{A}(\tau, x, y, z) + cc. \right\} d\mathbf{r}^3$$

$$+ v_x \iiint \left\{ A(\tau, x, y, z) \overline{D}(\tau, x, y, z) + cc. \right\} d\mathbf{r}^3$$

$$+ v_y \iiint \left\{ B(\tau, x, y, z) \overline{D}(\tau, x, y, z) + cc. \right\} d\mathbf{r}^3$$

$$+ v_z \iiint \left\{ C(\tau, x, y, z) \overline{D}(\tau, x, y, z) + cc. \right\} d\mathbf{r}^3$$

$$\cdots (3-1-9)$$

Here, cc. represents the complex conjugate of the immediately preceding term. Variables with a bar above them indicate the complex conjugate of that variable. The integral calculation appearing on the right side of this expression (3-1-9) can be considerably simplified as given by expression (3-1-10) below.
[Math. 96]

$$a = \iiint A(\tau, x, y, z) \overline{A}(\tau, x, y, z) = \frac{1}{(2\pi)^3} \iiint k_x^2 |\rho_k|^2 d\mathbf{k}^3$$

$$b = \iiint B(\tau, x, y, z) \overline{B}(\tau, x, y, z) = \frac{1}{(2\pi)^3} \iiint k_y^2 |\rho_k|^2 d\mathbf{k}^3$$

$$c = \iiint C(\tau, x, y, z) \overline{C}(\tau, x, y, z) = \frac{1}{(2\pi)^3} \iiint k_z^2 |\rho_k|^2 d\mathbf{k}^3$$

$$d = \iiint D(\tau, x, y, z) \overline{D}(\tau, x, y, z) = \frac{1}{(2\pi)^3} \iiint |\partial_\tau \rho_k|^2 d\mathbf{k}^3$$

$$e = \iiint A(\tau, x, y, z) \overline{B}(\tau, x, y, z) + cc. = \frac{1}{(2\pi)^3} \iiint k_x k_y |\rho_k|^2 d\mathbf{k}^3 + cc.$$

$$f = \iiint B(\tau, x, y, z) \overline{C}(\tau, x, y, z) + cc. = \frac{1}{(2\pi)^3} \iiint k_y k_z |\rho_k|^2 d\mathbf{k}^3 + cc.$$

$$g = \iiint C(\tau, x, y, z) \overline{A}(\tau, x, y, z) + cc. = \frac{1}{(2\pi)^3} \iiint k_z k_x |\rho_k|^2 d\mathbf{k}^3 + cc.$$

$$h = \iiint A(\tau, x, y, z) \overline{D}(\tau, x, y, z) + cc. = \frac{-i}{(2\pi)^3} \iiint k_x \rho_k \cdot \partial_\tau \overline{\rho}_k d\mathbf{k}^3 + cc.$$

$$m = \iiint B(\tau, x, y, z) \overline{D}(\tau, x, y, z) + cc. = \frac{-i}{(2\pi)^3} \iiint k_y \rho_k \cdot \partial_\tau \overline{\rho}_k d\mathbf{k}^3 + cc.$$

$$n = \iiint C(\tau, x, y, z) \overline{D}(\tau, x, y, z) + cc. = \frac{-i}{(2\pi)^3} \iiint k_z \rho_k \cdot \partial_\tau \overline{\rho}_k d\mathbf{k}^3 + cc.$$

$$\cdots (3-1-10)$$

Expression (3-1-9) is expressed, using expression (3-1-10), as given by expression (3-1-11) below.
[Math. 97]

$$\iiint \left| \left( \frac{\partial}{\partial \tau} + v_x \frac{\partial}{\partial x} + v_y \frac{\partial}{\partial y} + v_z \frac{\partial}{\partial z} \right) \rho(\tau, x, y, z) \right|^2 dxdydz$$

$$= a v_x^2 + b v_y^2 + c v_z^2 + e v_x v_y + f v_y v_z + g v_z v_x + h v_x + m v_y + n v_z + d$$

$$\cdots (3-1-11)$$

Expression (3-1-4) is expressed as a problem as given by expression (3-1-12) below.
[Math. 98]

$$\mathop{Min}_{(v_x, v_y, v_z)} \cdot \left[ \Psi(v_x, v_y, v_z) \right]$$

$$\Psi(v_x, v_y, v_z)$$

$$= av_x{}^2 + bv_y{}^2 + cv_z{}^2 + ev_xv_y + fv_yv_z + gv_zv_x + hv_x + mv_y + nv_z + d$$

$$+ \varepsilon(v_x{}^2 + v_y{}^2 + v_z{}^2)$$

$$\cdots (3-1-1\,2)$$

Expression (3-1-13) below is derived from expression (3-1-12).
[Math. 99]

$$
\begin{pmatrix}
\dfrac{\partial}{\partial v_x}\Psi(v_x, v_y, v_z) \\[2mm]
\dfrac{\partial}{\partial v_y}\Psi(v_x, v_y, v_z) \\[2mm]
\dfrac{\partial}{\partial v_z}\Psi(v_x, v_y, v_z)
\end{pmatrix}
=
\begin{pmatrix}
2a+2\varepsilon & e & g \\
e & 2b+2\varepsilon & f \\
g & f & 2c+2\varepsilon
\end{pmatrix}
\begin{pmatrix}
v_x \\ v_y \\ v_z
\end{pmatrix}
+
\begin{pmatrix}
h \\ m \\ n
\end{pmatrix}
= 0
$$

$$\cdots (3-1-1\,3)$$

Furthermore, expression (3-1-14) below is derived from expression (3-1-13).
[Math. 100]

$$
\begin{pmatrix}
v_x \\ v_y \\ v_z
\end{pmatrix}
= -
\begin{pmatrix}
2a+2\varepsilon & e & g \\
e & 2b+2\varepsilon & f \\
g & f & 2c+2\varepsilon
\end{pmatrix}^{-1}
\begin{pmatrix}
h \\ m \\ n
\end{pmatrix}
$$

$$\cdots (3-1-1\,4)$$

The elements of the matrix can be easily calculated from expression (3-1-10). Accordingly, the velocity vector can be calculated.

Here, the integration region of expression (3-1-10) will be explained. For example, by performing integration in a region near a single flying object, the velocity of that flying object is obtained. For example, by performing integration in a region including a plurality of flying objects moving in formation, the overall average velocity of the plurality of flying objects is obtained. When no flying object is present, a, b, c, ..., m, and n approach infinitely close to 0. In such cases, as evident from expression (3-1-13), $v_x$, $v_y$, and $v_z$ are derived as 0 due to the introduced $\varepsilon$.

<3-2. One-dimensional Array>

After the velocity of the flying object is determined, next, a coordinate system that is fixed in the (x, y) plane for this flying object is introduced.

FIG. 5 is a conceptual diagram illustrating a coordinate system (x, y) in which a flying object is not fixed and a coordinate system ($\xi$, $\eta$) in which the flying object is fixed when a one-dimensional multistatic array antenna is used.

In the coordinate system (x, y), the one-dimensional multistatic array antenna is arranged on the y-axis. As illustrated in FIG. 5, a coordinate system ($\xi$, $\eta$) opposing the projection velocity ($v_x$, $v_y$) of the flying object onto the two-dimensional plane (x, y) is used. In the coordinate system ($\xi$, $\eta$), the position of the flying object is virtually maintained and does not change, while the position of the one-dimensional multistatic array antenna virtually changes. Measurement data $\Phi_\tau$(x, $y_1$, $y_2$, t) at time $\tau$ can be regarded as data collected at locations with different $\xi$ values.

With this, the one-dimensional multistatic array antenna is regarded as scanning in the $\xi$-axis direction. Accordingly, information in the x-axis direction ($\xi$-axis direction) is obtained. Stated differently, information in the x-axis direction ($\xi$-axis direction) is constructed based on time-series information. Ultimately, the resolution in each direction for imaging the flying object is improved.

Here, the relationship between the coordinate system (x, y) and the coordinate system ($\xi$, $\eta$) is expressed as given by expression (3-2-1) below. The coordinate system ($\xi$, $\eta$) is also expressed as an oblique coordinate system.
[Math. 101]

$$x = \xi \cos(\theta)$$

$$y = \xi \sin(\theta) + \eta$$

$$\cos(\theta) = -v_x \left| \sqrt{v_x^2 + v_y^2} \right|^{-1}$$

$$\sin(\theta) = -v_y \left| \sqrt{v_x^2 + v_y^2} \right|^{-1}$$

$$\cdots (3-2-1)$$

The scattering field function based on the one-dimensional multistatic array antenna is given by expression (2-1-16). Expression (3-2-2) below is the same as expression (2-1-16).
[Math. 102]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k)$$

$$\cdot e^{i\left\{ \sqrt{\left(\sqrt{k^2 - k_{y_1}^2} + \sqrt{k^2 - k_{y_2}^2}\right)^2 - k_x^2} \right\} z} dk_x dk_{y_1} dk_{y_2}$$

$$\cdots (3-2-2)$$

Using u=cos($\theta$) and w=sin($\theta$), expression (3-2-3) below is obtained from expression (3-2-1).
[Math. 103]

$$x = u\xi$$

$$y_1 = w\xi + \eta_1$$

$$y_2 = w\xi + \eta_2$$

$$\cdots (3-2-3)$$

Using expression (3-2-3), expression (3-2-4) below is obtained from expression (3-2-2).
[Math. 104]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i\{k_x u\xi + k_{y_1}(w\xi+\eta_1) + k_{y_2}(w\xi+\eta_2)\}} a(k_x, k_{y_1}, k_{y_2}, k)$$

$$\cdot e^{i\{\sqrt{(\sqrt{k^2-k_{y_1}^2}+\sqrt{k^2-k_{y_2}^2})^2-k_x^2}\}z} dk_x dk_{y_1} dk_{y_2}$$

$$= \frac{1}{(2\pi)^3} \int_{-\infty}^{\infty} \int_{-\infty}^{\infty} \int_{-\infty}^{\infty} e^{-i\{(uk_x+wk_{y_1}+wk_{y_2})\xi+k_{y_1}\eta_1+k_{y_2}\eta_2\}} a(k_x, k_{y_1}, k_{y_2}, k)$$

$$\cdot e^{i\{\sqrt{(\sqrt{k^2-k_{y_1}^2}+\sqrt{k^2-k_{y_2}^2})^2-k_x^2}\}z} dk_x dk_{y_1} dk_{y_2}$$

$$\cdots (3-2-4)$$

Furthermore, variable transformation of expression (3-2-5) below is applied to expression (3-2-4).
[Math. 105]

$$k_\xi = uk_x + wk_{y_1} + wk_{y_2}$$

$$k_{\eta_1} = k_{y_1}$$

$$k_{\eta_2} = k_{y_2}$$

$$\cdots (3-2-5)$$

Accordingly, expression (3-2-6) below is obtained.
[Math. 106]

$$\phi(\xi, \eta_1, \eta_2, z, k)$$

$$= \frac{1}{(2\pi)^3} \int_{-\infty}^{\infty} \int_{-\infty}^{\infty} \int_{-\infty}^{\infty} e^{-i(k_\xi \xi + k_{\eta_1}\eta_1 + k_{\eta_2}\eta_2)} \alpha(k_\xi, k_{\eta_1}, k_{\eta_2}, k)e^{ik_z z} \frac{1}{u} dk_\xi dk_{\eta_1} dk_{\eta_2}$$

$$\cdots (3-2-6)$$

The 1/u in expression (3-2-6) corresponds to the Jacobian. In expression (3-2-6), substitution is applied as given by expression (3-2-7) below.
[Math. 107]

$$\phi(\xi, \eta_1, \eta_2, z, k) = \varphi(x, y_1, y_2, z, k)$$

$$\alpha(k_\xi, k_{\eta_1}, k_{\eta_2}, k) = a(k_x, k_{y_1}, k_{y_2}, k)$$

$$\frac{1}{u} dk_\xi dk_{\eta_1} dk_{\eta_2} = dk_x dk_{y_1} dk_{y_2}$$

$$k_z = \sqrt{(\sqrt{k^2 - k_{y_1}^2} + \sqrt{k^2 - k_{y_2}^2})^2 - k_x^2}$$

$$\cdot \cdot \cdot (3-2-7)$$

Next, determining $\alpha(k_\xi, k_{\eta_1}, k_{\eta_2}, k)$ using measurement data will be examined. The measurement data is accurately represented in the $(\xi, \eta)$ coordinate system illustrated in FIG. 5. By substituting z = 0 in expression (3-2-7), measurement data $\Phi(\xi, \eta_1, \eta_2, k)$ is expressed as given by expression (3-2-8) below.
[Math. 108]

$$\Phi(\xi, \eta_1, \eta_2, k)$$

$$= \frac{1}{(2\pi)^3} \int_{-\infty}^{\infty} \int_{-\infty}^{\infty} \int_{-\infty}^{\infty} e^{-i\left(k_\xi \xi + k_{\eta_1} \eta_1 + k_{\eta_2} \eta_2\right)} \alpha(k_\xi, k_{\eta_1}, k_{\eta_2}, k) \frac{1}{u} dk_\xi dk_{\eta_1} dk_{\eta_2}$$

$$\cdot \cdot \cdot (3-2-8)$$

By inverse Fourier transforming expression (3-2-8), $\alpha(k_\xi, k_{\eta 1}, k_{\eta 2}, k)$ is obtained as given by expression (3-2-9) below.
[Math. 109]

$$\alpha(k_\xi, k_{\eta_1}, k_{\eta_2}, k) = u\tilde{\Phi}(k_\xi, k_{\eta_1}, k_{\eta_2}, k)$$

$$\cdot \cdot \cdot (3-2-9)$$

Accordingly, the scattering field function is obtained as given by expression (3-2-10) below.
[Math. 110]

$$\phi(\xi, \eta_1, \eta_2, z, k)$$

$$= \frac{1}{(2\pi)^3} \int_{-\infty}^{\infty} \int_{-\infty}^{\infty} \int_{-\infty}^{\infty} e^{-i\left(k_\xi \xi + k_{\eta_1} \eta_1 + k_{\eta_2} \eta_2\right)} \tilde{\Phi}(k_\xi, k_{\eta_1}, k_{\eta_2}, k) e^{ik_z z} dk_\xi dk_{\eta_1} dk_{\eta_2}$$

$$\cdot \cdot \cdot (3-2-10)$$

By converting the scattering field function of expression (3-2-10) that is based on the coordinate system $(\xi, \eta)$ back to the scattering field function that is based on the original coordinate system (x, y), expression (3-2-11) below is obtained.
[Math. 111]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \alpha(k_\xi, k_{\eta_1}, k_{\eta_2}, k)$$

$$\cdot e^{i\{\sqrt{(\sqrt{k^2 - k_{y_1}^2} + \sqrt{k^2 - k_{y_2}^2})^2 - k_x^2}\}z} dk_x dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} u\tilde{\Phi}(k_\xi, k_{\eta_1}, k_{\eta_2}, k)$$

$$\cdot e^{i\{\sqrt{(\sqrt{k^2 - k_{y_1}^2} + \sqrt{k^2 - k_{y_2}^2})^2 - k_x^2}\}z} dk_x dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\Phi}(uk_x + wk_{y_1} + wk_{y_2}, k_{y_1}, k_{y_2}, k)$$

$$\cdot e^{i\{\sqrt{(\sqrt{k^2 - k_{y_1}^2} + \sqrt{k^2 - k_{y_2}^2})^2 - k_x^2}\}z} u\, dk_x dk_{y_1} dk_{y_2}$$

$$\cdots (3-2-1\,1)$$

The imaging function is obtained by setting $y_1 = y_2 = y$ as given by expression (3-2-12) below.
[Math. 112]

$$\rho(x, y, z)$$

$$= \frac{1}{(2\pi)^3} \int_0^{\infty} \int_{-\infty}^{\infty} \int_{-\infty}^{\infty} \int_{-\infty}^{\infty} e^{-i(k_x x + k_{y_1} y + k_{y_2} y)} \tilde{\Phi}(uk_x + wk_{y_1} + wk_{y_2}, k_{y_1}, k_{y_2}, k)$$

$$\cdot e^{ik_z z} \left(\frac{dk}{dk_z}\right) u\, dk_x dk_{y_1} dk_{y_2} dk_z$$

$$\cdots (3-2-1\,2)$$

### <3-3. Semi-two-dimensional Array>

In this section, the scattering field theory from the previous section is extended to the scattering field theory for a semi-two-dimensional array where the transmitting array antenna and the receiving array antenna are separated.
FIG. 6 is a conceptual diagram illustrating a coordinate system $(x, y)$ in which a flying object is not fixed and a coordinate system $(\xi, \eta)$ in which the flying object is fixed when a semi-two-dimensional array antenna is used. The distance between the transmitting array antenna and the receiving array antenna is d.
In the coordinate system $(x, y)$, the transmitting array antenna is arranged along the y-axis direction at $x = 0$, and the receiving array antenna is arranged along the y-axis direction at $x = d$. As illustrated in FIG. 6, a coordinate system $(\xi, \eta)$ opposing the projection velocity $(v_x, v_y)$ of the flying object onto the two-dimensional plane $(x, y)$ is used. In the coordinate system $(\xi, \eta)$, the position of the flying object does not change, while the positions of the transmitting array antenna and the receiving array antenna change. Measurement data $\Phi_\tau(x, y_1, y_2, t)$ at time $\tau$ can be regarded as data collected at locations with different $\xi$ values.
With this, the transmitting array antenna and the receiving array antenna are regarded as scanning in the $\xi$-axis

direction. Accordingly, information in the x-axis direction (ξ-axis direction) is obtained. Stated differently, information in the x-axis direction (ξ-axis direction) is constructed based on time-series information. Ultimately, the resolution in each direction for imaging the flying object is improved.

Here, the relationship between $(x_1, y_1, y_2)$ and $(\xi_1, \eta_1, \eta_2)$ is expressed as given by expression (3-3-1) below.
[Math. 113]

$$x_1 = \xi_1 \cos(\theta)$$

$$y_1 = \xi_1 \sin(\theta) + \eta_1$$

$$y_2 = \xi_1 \sin(\theta) + \eta_2$$

$$\cos(\theta) = -v_x \left| \sqrt{v_x^2 + v_y^2} \right|^{-1}$$

$$\sin(\theta) = -v_y \left| \sqrt{v_x^2 + v_y^2} \right|^{-1}$$

$$\cdots (3-3-1)$$

From expression (2-3-17), the scattering field function of the semi-two-dimensional array is expressed as given by expression (3-3-2) below.
[Math. 114]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} b(k_{x_1}, k_{y_1}, k_{y_2}, k) e^{s_3 x_2} e^{s_4 z} dk_{x_1} dk_{y_1} dk_{y_2}$$

$$\cdots (3-3-2)$$

Measurement data at z=0 is used to determine the function $b(k_{x1}, k_{y1}, k_{y2}, k)$ on the right side of expression (3-3-2).

By substituting $x_2 = x_1 + d$ and $z = 0$ in the right-hand side of expression (3-3-2), expression (3-3-3) below is obtained. Here, $\Phi(x_1, y_1, y_2, k)$ represents measurement data.
[Math. 115]

$$\Phi(x_1, y_1, y_2, k)$$

$$= \frac{1}{(2\pi)^3} \int_{-\infty}^{\infty} \int_{-\infty}^{\infty} \int_{-\infty}^{\infty} e^{-i(k_{x_1}x_1 + k_{y_1}y_1 + k_{y_2}y_2)} b(k_{x_1}, k_{y_1}, k_{y_2}, k) e^{s_3(x_1 + d)} dk_{x_1} dk_{y_1} dk_{y_2}$$

$$\cdots (3-3-3)$$

Expression (3-3-4) below is substituted into expression (3-3-3).
[Math. 116]

$$x_1 = \xi_1 \cos(\theta)$$

$$y_1 = \xi_1 \sin(\theta) + \eta_1$$

$$y_2 = \xi_1 \sin(\theta) + \eta_2$$

$$\cos(\theta) = -v_x \left| \sqrt{v_x{}^2 + v_y{}^2} \right|^{-1}$$

$$\sin(\theta) = -v_y \left| \sqrt{v_x{}^2 + v_y{}^2} \right|^{-1}$$

$$u = \cos(\theta) \quad w = \sin(\theta)$$

$$\cdots (3-3-4)$$

Accordingly, expression (3-3-5) below is obtained.

[Math. 117]

$$\Phi(x_1, y_1, y_2, k)$$

$$= \frac{1}{(2\pi)^3} \int_{-\infty}^{\infty} \int_{-\infty}^{\infty} \int_{-\infty}^{\infty} e^{-i\left\{k_{x_1}\xi_1 u + k_{y_1}(\xi_1 w + \eta_1) + k_{y_2}(\xi_1 w + \eta_2)\right\}} b(k_{x_1}, k_{y_1}, k_{y_2}, k) e^{s_3(\xi_1 u + d)} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i\left\{(k_{x_1}u + k_{y_1}w + k_{y_2}w + is_3 u)\xi_1 + k_{y_1}\eta_1 + k_{y_2}\eta_2\right\}} b(k_{x_1}, k_{y_1}, k_{y_2}, k) e^{s_3 d} dk_{x_1} dk_{y_1} dk_{y_2}$$

$$\cdots (3-3-5)$$

Furthermore, substitution is applied to expression (3-3-5) as given by expression (3-3-6) below.

[Math. 118]

$$k_\xi = k_{x_1} u + k_{y_1} w + k_{y_2} w + i s_3 u$$

$$= k_x u + k_{y_1} w + k_{y_2} w$$

$$k_{\eta_1} = k_{y_1}$$

$$k_{\eta_2} = k_{y_2}$$

$$k_x = k_{x_1} + i s_3$$

$$s_3 = \frac{-i k_{x_1} \sqrt{k^2 - k_{y_2}^2}}{\sqrt{k^2 - k_{y_1}^2}} = \frac{-i k_x \sqrt{k^2 - k_{y_2}^2}}{\sqrt{k^2 - k_{y_1}^2} + \sqrt{k^2 - k_{y_2}^2}}$$

$$\frac{dk_{x_1}}{dk_x} = \frac{\sqrt{k^2 - k_{y_1}^2}}{\sqrt{k^2 - k_{y_1}^2} + \sqrt{k^2 - k_{y_2}^2}}$$

$$dk_\xi dk_{\eta_1} dk_{\eta_2} = u dk_x dk_{y_1} dk_{y_2} = u \left( \frac{dk_x}{dk_{x_1}} \right)_{y_1, y_2} dk_{x_1} dk_{y_1} dk_{y_2}$$

$$\cdots (3-3-6)$$

Accordingly, expression (3-3-7) is obtained.
[Math. 119]

$$\Phi(\xi_1, \eta_1, \eta_2, k)$$

$$= \frac{1}{(2\pi)^3} \int_{-\infty}^{\infty} \int_{-\infty}^{\infty} \int_{-\infty}^{\infty} e^{-i\left(k_\xi \xi_1 + k_\eta \eta_1 + k_{\eta_2} \eta_2\right)} b(k_{x_1}, k_{y_1}, k_{y_2}, k) e^{s_3 d} \left( \frac{dk_{x_1}}{u dk_x} \right)_{y_1, y_2} dk_\xi dk_\eta dk_{\eta_2}$$

$$\cdots (3-3-7)$$

By inverse Fourier transforming both sides of expression (3-3-7), expression (3-3-8) below is obtained.
[Math. 120]

$$b(k_{x_1}, k_{y_1}, k_{y_2}, k) e^{s_3 d} \left( \frac{dk_{x_1}}{u dk_x} \right)_{y_1, y_2} = \tilde{\Phi}(k_\xi, k_{\eta_1}, k_{\eta_2}, k)$$

$$\cdots (3-3-8)$$

Accordingly, $b(k_{x1}, k_{y1}, k_{y2}, k)$ is obtained as follows.
[Math. 121]

$$b(k_{x_1}, k_{y_1}, k_{y_2}, k) = e^{-s_3 d} \left( \frac{u dk_x}{dk_{x_1}} \right)_{y_1, y_2} \tilde{\Phi}(k_\xi, k_{\eta_1}, k_{\eta_2}, k)$$

$$\cdots (3-3-9)$$

The scattering field function is obtained as given by expression (3-3-10) below.
[Math. 122]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)} b(k_{x_1}, k_{y_1}, k_{y_2}, k) e^{s_3 x_2} e^{s_4 z} dk_{x_1} dk_{y_1} dk_{y_2}$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)}$$

$$\cdot e^{s_3(x_2-d)} e^{s_4 z} u \tilde{\Phi}(k_x u + k_{y_1} w + k_{y_2} w, k_{y_1}, k_{y_2}, k) dk_x dk_{y_1} dk_{y_2}$$

$$\cdots (3-3-10)$$

The imaging function for wavenumber k is obtained from the scattering field function as given by expression (3-3-11) below.
[Math. 123]

$$\rho(x, y, z, k) = \lim_{\substack{x_1 \to x \\ x_2 \to x}} \varphi(x_1, y_1, x_2, y_2, z, k)$$

$$\cdots (3-3-11)$$

Furthermore, by integrating with respect to all values of k, the final imaging function is obtained as given by expression (3-3-12) below.
[Math. 124]

$$\rho(x, y, z)$$

$$= \frac{1}{(2\pi)^3} \int_0^\infty dk \int_{-\infty}^{\infty} \int_{-\infty}^{\infty} \int_{-\infty}^{\infty} e^{-i(k_x x + k_{y_1} y + k_{y_2} y)} b(k_{x_1}, k_{y_1}, k_{y_2}, k) e^{s_4 z} dk_{x_1} dk_{y_1} dk_{y_2}$$

$$= \frac{1}{(2\pi)^3} \int_0^\infty dk \int_{-\infty}^{\infty} \int_{-\infty}^{\infty} \int_{-\infty}^{\infty} e^{-i(k_x x + k_{y_1} y + k_{y_2} y)}$$

$$\cdot e^{-s_3 d} e^{s_4 z} u \tilde{\Phi}(k_x u + k_{y_1} w + k_{y_2} w, k_{y_1}, k_{y_2}, k) dk_x dk_{y_1} dk_{y_2}$$

$$\cdots (3-3-12)$$

FIG. 7 is a conceptual diagram showing an analysis region far from the antenna installation position. When the flying object is very far from the antenna installation position, three-dimensionally imaging the entire region from the antenna installation position to the flying object is inefficient and difficult to display. Therefore, expression (3-3-12) may be shifted in the x-axis direction. More specifically, when the shift amount in the x-axis direction is L, the variables in expression (3-3-12) may be replaced by x = L + ξ. Accordingly, expression (3-3-13) below is obtained.

[Math. 125]

$$\rho(\xi, y, z)$$

$$= \frac{1}{(2\pi)^3} \int_0^\infty dk \int_{-\infty}^\infty \int_{-\infty}^\infty \int_{-\infty}^\infty e^{-i\{k_x(\xi+L)+k_{y_1}y+k_{y_2}y\}}$$

$$\cdot e^{-s_3 d} e^{s_4 z} u \, \tilde{\Phi}(k_x u + k_{y_1} w + k_{y_2} w, k_{y_1}, k_{y_2}, k) dk_x dk_{y_1} dk_{y_2}$$

$$= \frac{1}{(2\pi)^3} \int_0^\infty dk \int_{-\infty}^\infty \int_{-\infty}^\infty \int_{-\infty}^\infty e^{-i(k_x \xi + k_{y_1} y + k_{y_2} y)}$$

$$\cdot e^{-s_3 d} e^{s_4 z} u \left\{ e^{-ik_x L} \tilde{\Phi}(k_x u + k_{y_1} w + k_{y_2} w, k_{y_1}, k_{y_2}, k) \right\} dk_x dk_{y_1} dk_{y_2}$$

$$\cdots (3-3-1 3)$$

Here, the Fourier transformed measurement data corresponding to the new analysis region may be expressed as given by expression (3-3-14) below.
[Math. 126]

$$\tilde{\Phi}' = e^{-ik_x L} \tilde{\Phi}(k_x u + k_{y_1} w + k_{y_2} w, k_{y_1}, k_{y_2}, k)$$

$$\cdots (3-3-1 4)$$

<3-4. Variations>

In this chapter, a velocity derived using a provisional imaging function is used. However, a velocity determined by other methods may be used. For example, when the velocity of an object is known, the known velocity may be used. Alternatively, a velocity measured using other velocity sensors such as Doppler sensors may be used. A velocity estimated as the velocity of the object based on properties and the like of the object may be used.
In this chapter, the scattering field theory that takes the movement of the object into consideration is applied to an example using a one-dimensional array and an example using a semi-two-dimensional array. However, the scattering field theory that takes the movement of the object into consideration may be further applied to an example using a two-dimensional array.
In this chapter, a coordinate system in which the position of the object is fixed with respect to the x-axis direction and y-axis direction is used. However, a coordinate system in which the position of the object is fixed with respect to the z-axis direction may be further used.

<4. Configuration and Operations of Imaging Device>

Based on the contents described above, the configuration and operations of an imaging device for imaging an object in a measurement area using measurement data of scattered waves will be described hereinafter.
The waves used for measuring scattered waves as used herein may, for example, be radio waves or may be other waves such as microwaves, millimeter waves, or terahertz waves. The waves may also be light or sound. The measurement area may be a region in the air, and the object may be a flying object. The object in the measurement area has a physical characteristic that is different from those of the surrounding media. Specifically, the physical characteristic is a physical characteristic that corresponds to the reflectance of the waves. In the case where radio waves are used as the waves, the physical characteristic may be the dielectric constant.

FIG. 8 is a basic schematic diagram of the imaging device according to the present embodiment. Imaging device 100 shown in FIG. 8 includes a plurality of transmitters 101, a plurality of receivers 102, and information processing circuit 103. Imaging device 100 may further include display 104.

Each transmitter 101 is a circuit that transmits waves. More specifically, each transmitter 101 transmits waves to the measurement area. Each transmitter 101 may be a transmitting antenna or may include a plurality of transmitting elements such as a plurality of transmitting antenna elements.

Each receiver 102 is a circuit that receives scattered waves. More specifically, each receiver 102 receives scattered waves from the measurement area. Each receiver 102 may be a receiving antenna or may include a plurality of receiving elements such as a plurality of receiving antenna elements.

The plurality of transmitters 101 and the plurality of receivers 102 may be arranged in a one-dimensional array, may be arranged in a two-dimensional array, and may be arranged in a semi-two-dimensional array.

Information processing circuit 103 is a circuit that performs information processing. More specifically, information processing circuit 103 obtains measurement data of scattered waves, and images an object in the measurement area using the measurement data of the scattered waves. For example, information processing circuit 103 may perform computational processing indicated by the theory described above when imaging the object using the measurement data.

Information processing circuit 103 may also be a computer or a processor of a computer. Information processing circuit 103 may perform information processing by reading out a program from memory and executing the program. Alternatively, information processing circuit 103 may be a dedicated circuit that images an object in the measurement area in accordance with measurement data.

Information processing circuit 103 may be capable of communicating with the plurality of transmitters 101 and the plurality of receivers 102. Information processing circuit 103 may control the operation of the plurality of transmitters 101 and the plurality of receivers 102. Information processing circuit 103 may obtain position information and measurement data from the plurality of transmitters 101 and the plurality of receivers 102.

In order to image the object, information processing circuit 103 may generate an image that indicates the object. Information processing circuit 103 may output the image indicating the object on display 104 or the like. Alternatively, information processing circuit 103 may output the image indicating the object to a printer (not illustrated in the drawings). As another alternative, information processing circuit 103 may transmit the image as electronic data to a different device (not illustrated in the drawings) via wired or wireless communication.

Display 104 is a display device such as a liquid crystal display. Note that display 104 is merely an arbitrary element and is not an essential element. Display 104 may be an external device that is not included in the configuration of imaging device 100.

FIG. 9 is a flowchart showing basic operations of imaging device 100 shown in FIG. 8. More specifically, the operations shown in FIG. 9 are performed by the elements of imaging device 100 shown in FIG. 8 such as the plurality of transmitters 101, the plurality of receivers 102, and information processing circuit 103.

First, each transmitter 101 transmits waves to the measurement area (S101). Each receiver 102 receives scattered waves from the measurement area (S102). Then, information processing circuit 103 images the object in the measurement area using measurement data of the scattered waves (S103, S104, and S105).

More specifically, in imaging the object, information processing circuit 103 first derives the scattering field function using the measurement data and the velocity vector of the object (S103). Here, the scattering field function is a function that receives the transmission position of the wave and the reception position of the scattered wave as input and outputs the amount of the scattered wave at the reception position. More specifically, information processing circuit 103 derives the scattering field function from the measurement data using a coordinate system determined using the velocity vector of the object, wherein the position of the object is fixed in at least two directions in the coordinate system.

Next, information processing circuit 103 derives the imaging function using the scattering field function (S104). Here, the imaging function is a function that receives an imaging target position as input and outputs an image intensity at the imaging target position, and is a function defined using an amount output from the scattering field function in response to inputting the imaging target position into the scattering field function as the transmission and reception positions.

Finally, information processing circuit 103 images the object in the measurement area using the imaging function (S105).

This allows imaging device 100 to image the object by fixing the position of the object. Accordingly, imaging device 100 is capable of imaging a moving object in the measurement area with high accuracy.

Imaging device 100 is capable of transmitting waves and receiving scattered waves from various directions with respect to the object without having to move the plurality of transmitters 101 and the plurality of receivers 102. Accordingly, imaging device 100 is capable of obtaining sufficient information and imaging the object with high accuracy even with a small number of transmitters 101 and receivers 102.

For example, the plurality of transmitters 101 and the plurality of receivers 102 may be arranged along a straight line parallel to the y-axis.

The scattering field function may be expressed as shown below.

[Math. 127]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\Phi}(uk_x + wk_{y_1} + wk_{y_2}, k_{y_1}, k_{y_2}, k)$$

$$\cdot e^{i\{\sqrt{(\sqrt{k^2 - k_{y_1}^2} + \sqrt{k^2 - k_{y_2}^2})^2 - k_x^2}\}z} u dk_x dk_{y_1} dk_{y_2}$$

Here, x and z of the scattering field function represent the x-coordinate and z-coordinate of the transmission position and reception position. $y_1$ of the scattering field function represents the y-coordinate of the transmission position. $y_2$ of the scattering field function represents the y-coordinate of the reception position. k represents the wavenumber of the wave. $k_x$, $k_{y1}$, and $k_{y2}$ represent variables corresponding to the wavenumbers with respect to x, $y_1$, and $y_2$ of the scattering field function.

Also,

[Math. 128]

$$\tilde{\Phi}$$

represents the Fourier transformed measurement data.

Moreover, u and w are defined by the following.

[Math. 129]

$$u = -v_x \left| \sqrt{v_x^2 + v_y^2} \right|^{-1}$$

$$w = -v_y \left| \sqrt{v_x^2 + v_y^2} \right|^{-1}$$

$v_x$ and $v_y$ represent the x-component and y-component of the velocity vector.

This allows imaging device 100 to image a moving object in the measurement area with high accuracy by using the scattering field function derived from the measurement data obtained by the plurality of transmitters 101 and the plurality of receivers 102 arranged in a straight line.

For example, the imaging function may be expressed as shown below.

[Math. 130]

$$\rho(x, y, z)$$

$$= \frac{1}{(2\pi)^3} \int_{0}^{\infty} \int_{-\infty}^{\infty} \int_{-\infty}^{\infty} \int_{-\infty}^{\infty} e^{-i(k_x x + k_{y_1} y + k_{y_2} y)} \tilde{\Phi}(uk_x + wk_{y_1} + wk_{y_2}, k_{y_1}, k_{y_2}, k)$$

$$\cdot e^{ik_z z} \left( \frac{dk}{dk_z} \right) u dk_x dk_{y_1} dk_{y_2} dk_z$$

Here, x, y, and z of the imaging function represent the x-coordinate, y-coordinate, and z-coordinate of the imaging target position.

$K_z$ and $dk/dk_z$ are defined as follows.

[Math. 131]

$$k_z = \sqrt{\left(\sqrt{k^2 - k_{y_1}^2} + \sqrt{k^2 - k_{y_2}^2}\right)^2 - k_x^2}$$

$$\frac{dk}{dk_z} = \frac{k_z \sqrt{k^2 - k_{y_1}^2} \sqrt{k^2 - k_{y_2}^2}}{k(k_x^2 + k_z^2)}$$

This allows imaging device 100 to image a moving object in the measurement area with high accuracy by using the imaging function derived from the measurement data obtained by the plurality of transmitters 101 and the plurality of receivers 102 arranged in a straight line.

For example, the plurality of transmitters 101 may be arranged along a first straight line parallel to the y-axis. The plurality of receivers 102 may be arranged along a second straight line parallel to the y-axis.

The scattering field function may be expressed as follows.

[Math. 132]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)}$$

$$\cdot e^{s_3(x_2 - d)} e^{s_4 z} u \, \tilde{\Phi}(k_x u + k_{y_1} w + k_{y_2} w, k_{y_1}, k_{y_2}, k) dk_x dk_{y_1} dk_{y_2}$$

Here, z of the scattering field function represents the z-coordinate of the transmission position and reception position. $x_1$ and $y_1$ of the scattering field function represent the x-coordinate and y-coordinate of the transmission position. $x_2$ and $y_2$ of the scattering field function represent the x-coordinate and y-coordinate of the reception position. k represents the wavenumber of the wave. $k_x$, $k_{y1}$, and $k_{y2}$ represent variables corresponding to the wavenumbers with respect to x, $y_1$, and $y_2$ of the scattering field function. d represents the distance between the first straight line and the second straight line.

Also,

[Math. 133]

$$\tilde{\Phi}$$

represents the Fourier transformed measurement data.

Moreover, $s_3$ and $s_4$ are defined by the following.

[Math. 134]

$$s_3 = \frac{-i k_{x_1} \sqrt{k^2 - k_{y_2}^2}}{\sqrt{k^2 - k_{y_1}^2}}$$

$$s_4 = i\sqrt{\left(\sqrt{k^2 - k_{y_1}^2} + \sqrt{k^2 - k_{y_2}^2}\right)^2 - (k_{x_1} + is_3)^2}$$

Moreover, u and w are defined by the following.

[Math. 135]

$$u = -v_x \left| \sqrt{v_x^2 + v_y^2} \right|^{-1}$$

$$w = -v_y \left| \sqrt{v_x^2 + v_y^2} \right|^{-1}$$

Moreover, $v_x$ and $v_y$ represent the x-component and y-component of the velocity vector.

This allows imaging device 100 to image a moving object in the measurement area with high accuracy by using the scattering field function derived from the measurement data obtained by the plurality of transmitters 101 arranged on a first straight line and the plurality of receivers 102 arranged on a second straight line.

For example, the imaging function may be expressed as shown below.

[Math. 136]

$$\rho(x, y, z)$$

$$= \frac{1}{(2\pi)^3} \int_0^\infty dk \int_{-\infty}^\infty \int_{-\infty}^\infty \int_{-\infty}^\infty e^{-i(k_x x + k_{y_1} y + k_{y_2} y)}$$

$$\cdot e^{-s_3 d} e^{s_4 z} u\, \tilde{\Phi}(k_x u + k_{y_1} w + k_{y_2} w, k_{y_1}, k_{y_2}, k)\, dk_x dk_{y_1} dk_{y_2}$$

Here, x, y, and z of the imaging function represent the x-coordinate, y-coordinate, and z-coordinate of the imaging target position.

This allows imaging device 100 to image a moving object in the measurement area with high accuracy by using the imaging function derived from the measurement data obtained by the plurality of transmitters 101 arranged on a first straight line and the plurality of receivers 102 arranged on a second straight line.

For example, information processing circuit 103 may image the object using an imaging function whose x-coordinate is shifted by x = L + ξ. The imaging function with the shifted x-coordinate may be expressed as shown below.

[Math. 137]

$$\rho(\xi, y, z)$$

$$= \frac{1}{(2\pi)^3} \int_0^\infty dk \int_{-\infty}^\infty \int_{-\infty}^\infty \int_{-\infty}^\infty e^{-i(k_x \xi + k_{y_1} y + k_{y_2} y)}$$

$$\cdot e^{-s_3 d} e^{s_4 z} u \left\{ e^{-ik_x L} \tilde{\Phi}(k_x u + k_{y_1} w + k_{y_2} w, k_{y_1}, k_{y_2}, k) \right\} dk_x dk_{y_1} dk_{y_2}$$

Here, L represents the amount of shift in the x-coordinate, and ξ represents the x-coordinate shifted by L.

This allows imaging device 100 to shift the imaging target area. Accordingly, imaging device 100 is capable of efficiently imaging a distant object from the plurality of transmitters 101 and the plurality of receivers 102.

For example, information processing circuit 103 may derive a provisional scattering field function using the measurement data without using the velocity vector. Information processing circuit 103 may derive a provisional imaging function using the provisional scattering field function. Information processing circuit 103 may derive the velocity vector using the provisional imaging function.

This allows imaging device 100 to derive the velocity vector of the object using the provisional scattering field function and the provisional imaging function derived without using the velocity vector of the object. Imaging device 100 is capable of imaging an object that moves in the measurement area with high accuracy by using the scattering field function and the imaging function derived using the velocity vector.

For example, in the deriving of the velocity vector, information processing circuit 103 may derive the velocity vector using an arithmetic expression represented as follows.

[Math. 138]

$$\begin{pmatrix} v_x \\ v_y \\ v_z \end{pmatrix} = -\begin{pmatrix} 2a+2\varepsilon & e & g \\ e & 2b+2\varepsilon & f \\ g & f & 2c+2\varepsilon \end{pmatrix}^{-1} \begin{pmatrix} h \\ m \\ n \end{pmatrix}$$

Here, a, b, c, e, f, g, h, m, and n in the arithmetic expression are defined as follows.

[Math. 139]

$$a = \frac{1}{(2\pi)^3} \iiint k_x^2 |\rho_k|^2 d\mathbf{k}^3$$

$$b = \frac{1}{(2\pi)^3} \iiint k_y^2 |\rho_k|^2 d\mathbf{k}^3$$

$$c = \frac{1}{(2\pi)^3} \iiint k_z^2 |\rho_k|^2 d\mathbf{k}^3$$

$$e = \frac{1}{(2\pi)^3} \iiint k_x k_y |\rho_k|^2 d\mathbf{k}^3 + cc.$$

$$f = \frac{1}{(2\pi)^3} \iiint k_y k_z |\rho_k|^2 d\mathbf{k}^3 + cc.$$

$$g = \frac{1}{(2\pi)^3} \iiint k_z k_x |\rho_k|^2 d\mathbf{k}^3 + cc.$$

$$h = \frac{-i}{(2\pi)^3} \iiint k_x \rho_k \cdot \partial_\tau \bar{\rho}_k d\mathbf{k}^3 + cc.$$

$$m = \frac{-i}{(2\pi)^3} \iiint k_y \rho_k \cdot \partial_\tau \bar{\rho}_k d\mathbf{k}^3 + cc.$$

$$n = \frac{-i}{(2\pi)^3} \iiint k_z \rho_k \cdot \partial_\tau \bar{\rho}_k d\mathbf{k}^3 + cc.$$

$v_x$, $v_y$, and $v_z$ represent the x-component, y-component, and z-component of the velocity vector. $\varepsilon$ represents a positive value. $\rho_k$ represents a provisional imaging function that includes $\tau$ as one of a plurality of input variables and is Fourier transformed with respect to x, y, and z. $k_x$, $k_y$, and $k_z$ in the arithmetic expression represent the wavenumbers with respect to x, y, and z of the provisional imaging function.

Also,

[Math. 140]

$$\mathbf{k}$$

represents a wavenumber vector of $k_x$, $k_y$, and $k_z$ in the arithmetic expression. $\tau$ represents a time unit corresponding to the number of data collections. cc. represents the complex conjugate of the term immediately preceding cc..

Also,

[Math. 141]

$$\overline{\rho_k}$$

represents the complex conjugate of $\rho_k$.

This allows imaging device 100 to derive the velocity vector of the object from the provisional imaging function using an arithmetic expression.

For example, the wave may be a microwave. This allows imaging device 100 to inhibit attenuation of the wave by moisture in the measurement area compared to electromagnetic waves with shorter wavelengths.

For example, other elements, expressions, variables, and so on described in the present embodiment are applicable as appropriate to the plurality of transmitters 101, the plurality of receivers 102, information processing circuit 103, the scattering field function, the imaging function, and so on described above as to the basic configuration and the basic operations. The scattering field function, the imaging function, and so on given in the present embodiment may be modified and applied as appropriate. For example, it is possible to use a mathematical expression that represents substantially the same content as that given by the mathematical expression described above, or to use any other mathematical expression derived based on the theory described above.

(Additional Comments)

While some aspects of the imaging device have been described thus far with reference to the embodiment, the modes of the imaging device are not limited to this embodiment. Any modification conceivable by those skilled in the art may be made to the embodiment, and a plurality of elements according to the embodiment may be combined arbitrarily. For example, processing that is executed by a specific element according to the embodiment may be executed by a different element, instead of the specific element. Moreover, a sequence of a plurality of processes may be changed, or a plurality of processes may be executed in parallel.

The imaging method including steps executed by each element of the imaging device may be executed by any arbitrary device or system. For example, part or all of the imaging method may be executed by a computer that includes, for example, a processor, memory, and an input/output circuit. At this time, a program for causing the computer to execute the imaging method may be executed by the computer to execute the imaging method.

The above-described program may be recorded on a non-transitory computer-readable recording medium.

Each element of the imaging device may be configured by dedicated hardware or by general-purpose hardware that executes the above-described program or the like, or may be configured by a combination of them. The general-purpose hardware may be configured by, for example, memory that records the program and a general-purpose processor that reads out and executes the program from the memory. The memory as used herein may, for example, be semiconductor memory or a hard disk, and the general-purpose processor may, for example, be a CPU.

The dedicated hardware may be configured by, for example, memory and a dedicated processor. For example, the dedicated processor may execute the imaging method described above with reference to the memory for recording measurement data.

Each element of the imaging device may be an electric circuit. These electric circuits may be configured as a single electric circuit as a whole, or each may be a different electric circuit. These electric circuits may correspond to dedicated hardware or general-purpose hardware that executes the above-described program or the like.

The imaging device is not limited to being a physically integrated device, and may include a plurality of sub-devices arranged in a distributed manner. The imaging device may also be referred to as an imaging system.

[Industrial Applicability]

One aspect of the present disclosure is useful in an imaging device that images an object in a measurement area using measurement data of scattered waves, and is applicable to an exploration system or the like that explores an object that moves in the measurement area.

[Reference Signs List]

100 imaging device
101 transmitter
102 receiver
103 information processing circuit
104 display

**Claims**

1. An imaging device comprising:

a plurality of transmitters that each transmit a wave to a measurement area;
a plurality of receivers that each receive a scattered wave of the wave from the measurement area; and
an information processing circuit that images an object in the measurement area using measurement data of the scattered wave, wherein
in imaging the object, the information processing circuit:

derives, using the measurement data and a velocity vector of the object, a scattering field function that receives a transmission position of the wave and a reception position of the scattered wave as input and outputs an amount of the scattered wave at the reception position;
derives an imaging function that receives an imaging target position as input and outputs an image intensity at the imaging target position, and is defined using an amount output from the scattering field function in response to inputting the imaging target position into the scattering field function as the transmission position and the reception position; and
images the object in the measurement area using the imaging function, and

in deriving the scattering field function, the information processing circuit derives the scattering field function from the measurement data using a coordinate system that is determined using the velocity vector and in which a position of the object is fixed in at least two directions.

2. The imaging device according to claim 1, wherein

the plurality of transmitters and the plurality of receivers are arranged along a straight line parallel to a y-axis,
the scattering field function is expressed as:

[Math. 1]

$$\varphi(x, y_1, y_2, z, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} \tilde{\Phi}(uk_x + wk_{y_1} + wk_{y_2}, k_{y_1}, k_{y_2}, k)$$

$$\cdot e^{i\{\sqrt{(\sqrt{k^2-k_{y_1}^2}+\sqrt{k^2-k_{y_2}^2})^2-k_x^2}\}z} u \, dk_x \, dk_{y_1} \, dk_{y_2}$$

where x and z of the scattering field function respectively represent an x-coordinate and a z-coordinate of the transmission position and the reception position, $y_1$ of the scattering field function represents a y-coordinate of the transmission position, $y_2$ of the scattering field function represents a y-coordinate of the reception position, k represents a wavenumber of the wave, and $k_x$, $k_{y1}$, and $k_{y2}$ respectively represent variables corresponding to wavenumbers with respect to x, $y_1$, and $y_2$ of the scattering field function,

[Math. 2]

$$\tilde{\Phi}$$

represents the measurement data that has been Fourier transformed, and u and w are defined as:

[Math. 3]

$$u = -v_x \left| \sqrt{v_x^2 + v_y^2} \right|^{-1}$$

$$w = -v_y \left| \sqrt{v_x^2 + v_y^2} \right|^{-1}$$

where $v_x$ and $v_y$ respectively represent an x-component and a y-component of the velocity vector.

3. The imaging device according to claim 2, wherein the imaging function is expressed as:

[Math. 4]

$$\rho(x, y, z)$$

$$= \frac{1}{(2\pi)^3} \int_0^\infty \int_{-\infty}^\infty \int_{-\infty}^\infty \int_{-\infty}^\infty e^{-i(k_x x + k_{y_1} y + k_{y_2} y)} \tilde{\Phi}(uk_x + wk_{y_1} + wk_{y_2}, k_{y_1}, k_{y_2}, k)$$

$$\cdot e^{ik_z z} \left( \frac{dk}{dk_z} \right) u \, dk_x dk_{y_1} dk_{y_2} dk_z$$

where x, y, and z of the imaging function respectively represent an x-coordinate, a y-coordinate, and a z-coordinate of the imaging target position, and $k_z$ and $dk/dk_z$ are defined as:

[Math. 5]

$$k_z = \sqrt{\left( \sqrt{k^2 - k_{y_1}^2} + \sqrt{k^2 - k_{y_2}^2} \right)^2 - k_x^2}$$

$$\frac{dk}{dk_z} = \frac{k_z \sqrt{k^2 - k_{y_1}^2} \sqrt{k^2 - k_{y_2}^2}}{k(k_x^2 + k_z^2)}$$

.

4. The imaging device according to claim 1, wherein

the plurality of transmitters are arranged along a first straight line parallel to a y-axis,
the plurality of receivers are arranged along a second straight line parallel to the y-axis,

the scattering field function is expressed as:

[Math. 6]

$$\varphi(x_1, y_1, x_2, y_2, z, k)$$

$$= \frac{1}{(2\pi)^3} \int_{-\infty}^{\infty} \int_{-\infty}^{\infty} \int_{-\infty}^{\infty} e^{-i(k_{x_1} x_1 + k_{y_1} y_1 + k_{y_2} y_2)}$$

$$\cdot e^{s_3(x_2 - d)} e^{s_4 z} u \tilde{\Phi}(k_x u + k_{y_1} w + k_{y_2} w, k_{y_1}, k_{y_2}, k) dk_x dk_{y_1} dk_{y_2}$$

where z of the scattering field function represents a z-coordinate of the transmission position and the reception position, $x_1$ and $y_1$ of the scattering field function respectively represent an x-coordinate and a y-coordinate of the transmission position, $x_2$ and $y_2$ of the scattering field function respectively represent an x-coordinate and a y-coordinate of the reception position, k represents a wavenumber of the wave, $k_x$, $k_{y1}$, and $k_{y2}$ respectively represent variables corresponding to wavenumbers with respect to x, $y_1$, and $y_2$ of the scattering field function, and d represents a distance between the first straight line and the second straight line,

[Math. 7]

$$\tilde{\Phi}$$

represents the measurement data that has been Fourier transformed,
$s_3$ and $s_4$ are defined as:

[Math. 8]

$$s_3 = \frac{-i k_{x_1} \sqrt{k^2 - k_{y_2}^2}}{\sqrt{k^2 - k_{y_1}^2}}$$

$$s_4 = i \sqrt{(\sqrt{k^2 - k_{y_1}^2} + \sqrt{k^2 - k_{y_2}^2})^2 - (k_{x_1} + i s_3)^2}$$

and u and w are defined as:

[Math. 9]

$$u = -v_x \left| \sqrt{v_x^2 + v_y^2} \right|^{-1}$$

$$w = -v_y \left| \sqrt{v_x^2 + v_y^2} \right|^{-1}$$

where $v_x$ and $v_y$ respectively represent an x-component and a y-component of the velocity vector.

5. The imaging device according to claim 4, wherein the imaging function is expressed as:

[Math. 10]

$$
\rho(x,y,z)
$$

$$
= \frac{1}{(2\pi)^3} \int_0^\infty dk \int_{-\infty}^\infty \int_{-\infty}^\infty \int_{-\infty}^\infty e^{-i(k_x x + k_{y_1} y + k_{y_2} y)}
$$

$$
\cdot e^{-s_3 d} e^{s_4 z} u \, \tilde{\Phi}(k_x u + k_{y_1} w + k_{y_2} w, k_{y_1}, k_{y_2}, k) dk_x dk_{y_1} dk_{y_2}
$$

where x, y, and z of the imaging function respectively represent an x-coordinate, a y-coordinate, and a z-coordinate of the imaging target position.

6. The imaging device according to claim 5, wherein

the information processing circuit images the object using the imaging function in which an x-coordinate is shifted by x = L + ξ, and
the imaging function in which the x-coordinate is shifted is expressed as:

[Math. 11]

$$
\rho(\xi,y,z)
$$

$$
= \frac{1}{(2\pi)^3} \int_0^\infty dk \int_{-\infty}^\infty \int_{-\infty}^\infty \int_{-\infty}^\infty e^{-i(k_x \xi + k_{y_1} y + k_{y_2} y)}
$$

$$
\cdot e^{-s_3 d} e^{s_4 z} u \left\{ e^{-ik_x L} \tilde{\Phi}(k_x u + k_{y_1} w + k_{y_2} w, k_{y_1}, k_{y_2}, k) \right\} dk_x dk_{y_1} dk_{y_2}
$$

where L represents an amount of shift in the x-coordinate, and ξ represents the x-coordinate shifted by L.

7. The imaging device according to any one of claims 1 to 6, wherein
the information processing circuit:

derives a provisional scattering field function using the measurement data without using the velocity vector;
derives a provisional imaging function using the provisional scattering field function; and
derives the velocity vector using the provisional imaging function.

8. The imaging device according to claim 7, wherein
in deriving the velocity vector, the information processing circuit:

derives the velocity vector using an arithmetic expression represented as:

[Math. 12]

$$
\begin{pmatrix} v_x \\ v_y \\ v_z \end{pmatrix} = - \begin{pmatrix} 2a+2\varepsilon & e & g \\ e & 2b+2\varepsilon & f \\ g & f & 2c+2\varepsilon \end{pmatrix}^{-1} \begin{pmatrix} h \\ m \\ n \end{pmatrix}
$$

where a, b, c, e, f, g, h, m, and n in the arithmetic expression are defined as:

[Math. 13]

$$a = \frac{1}{(2\pi)^3} \iiint k_x^2 |\rho_k|^2 \, d\mathbf{k}^3$$

$$b = \frac{1}{(2\pi)^3} \iiint k_y^2 |\rho_k|^2 \, d\mathbf{k}^3$$

$$c = \frac{1}{(2\pi)^3} \iiint k_z^2 |\rho_k|^2 \, d\mathbf{k}^3$$

$$e = \frac{1}{(2\pi)^3} \iiint k_x k_y |\rho_k|^2 \, d\mathbf{k}^3 + cc.$$

$$f = \frac{1}{(2\pi)^3} \iiint k_y k_z |\rho_k|^2 \, d\mathbf{k}^3 + cc.$$

$$g = \frac{1}{(2\pi)^3} \iiint k_z k_x |\rho_k|^2 \, d\mathbf{k}^3 + cc.$$

$$h = \frac{-i}{(2\pi)^3} \iiint k_x \rho_k \cdot \partial_\tau \overline{\rho}_k \, d\mathbf{k}^3 + cc.$$

$$m = \frac{-i}{(2\pi)^3} \iiint k_y \rho_k \cdot \partial_\tau \overline{\rho}_k \, d\mathbf{k}^3 + cc.$$

$$n = \frac{-i}{(2\pi)^3} \iiint k_z \rho_k \cdot \partial_\tau \overline{\rho}_k \, d\mathbf{k}^3 + cc.$$

$v_x$, $v_y$, and $v_z$ respectively represent an x-component, a y-component, and a z-component of the velocity vector, $\varepsilon$ represents a positive value, $\rho_k$ represents the provisional imaging function that includes $\tau$ as one of a plurality of input variables and is Fourier transformed with respect to x, y, and z, and $k_x$, $k_y$, and $k_z$ in the arithmetic expression respectively represent wavenumbers with respect to x, y, and z of the provisional imaging function,

[Math. 14]

$$\mathbf{k}$$

represents a wavenumber vector of $k_x$, $k_y$, and $k_z$ in the arithmetic expression, $\tau$ represents a time unit corresponding to a number of data collections, and cc. represents a complex conjugate of a term immediately preceding cc., and

[Math. 15]

$$\overline{\rho}_k$$

represents the complex conjugate of $\rho_k$.

9. An imaging method comprising:

transmitting, by each of a plurality of transmitters, a wave to a measurement area;
receiving, by each of a plurality of receivers, a scattered wave of the wave from the measurement area; and
imaging an object in the measurement area using measurement data of the scattered wave, wherein
the imaging of the object includes:

deriving, using the measurement data and a velocity vector of the object, a scattering field function that receives a transmission position of the wave and a reception position of the scattered wave as input and outputs an amount of the scattered wave at the reception position;
deriving an imaging function that receives an imaging target position as input and outputs an image intensity at the imaging target position, and is defined using an amount output from the scattering field function in response to inputting the imaging target position into the scattering field function as the transmission position and the reception position; and
imaging the object in the measurement area using the imaging function, and

in the deriving of the scattering field function, the scattering field function is derived from the measurement data using a coordinate system that is determined using the velocity vector and in which a position of the object is fixed in at least two directions.

FIG. 1

One-dimensional
multistatic antenna

$P_2(x, y_2, z)$

x

$\rho_2$

$P_1(x, y_1, z)$

Region D

$\rho_1$

y

$P(\xi, \eta, \zeta)$

z

EP 4 660 619 A1

FIG. 2

$P_1(x_1, y_1, z)$

$P_2(x_2, y_2, z)$

$\rho1$

$\rho2$

y

x

z

$P(\xi, \eta, \zeta)$

Region D

EP 4 660 619 A1

# FIG. 3

FIG. 4

FIG. 5

Transmission/reception data collection line corresponding to time $\tau$

Velocity vector $(v_x, v_y)$ of flying object

$\Delta \xi = \Delta \tau \sqrt{v_x{}^2 + v_y{}^2}$

Data collection time interval $\Delta \tau$

$\xi$

$\theta$

$y$

$y_1, y_2$

$\eta$

$\eta_1, \eta_2$

$x$

$O$

## FIG. 6

$$\Delta\xi = \Delta\tau\sqrt{v_x^2 + v_y^2}$$

Velocity vector $(v_x, v_y)$ of flying object

Transmission/reception data collection line corresponding to time $\tau$

Virtual movement with passage of time $\tau$

EP 4 660 619 A1

FIG. 7

EP 4 660 619 A1

# FIG. 8

Transmitter 101

Receiver 102

Information processing circuit 103

Display 104

100

# FIG. 9

START

Transmit waves to measurement area — S101

Receive scattered waves from measurement area — S102

Derive scattering field function — S103

Derive imaging function using scattering field function — S104

Image object in measurement area using imaging function — S105

END

# EP 4 660 619 A1

## INTERNATIONAL SEARCH REPORT

International application No.

**PCT/JP2023/046615**

### A. CLASSIFICATION OF SUBJECT MATTER

***G01N 22/00***(2006.01)i; ***G01N 22/02***(2006.01)i; ***G01S 13/89***(2006.01)i
FI: G01N22/00 S; G01N22/02 C; G01S13/89

According to International Patent Classification (IPC) or to both national classification and IPC

### B. FIELDS SEARCHED

Minimum documentation searched (classification system followed by classification symbols)

G01N22/00-G01N22/04, G01S13/00-G01S13/95, G01S7/00-G01S7/64, G01P1/00-G01P21/02, G03B42/00-G03B42/08,
G01N21/35-G01N21/3586, A61B5/0507, A61B6/00-A61B6/58. A61B10/00-A61B10/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII), JSTChina (JDreamIII), PubMed, Science Direct, IEEE Xplore, Wiley Online Library,
ACS PUBLICATIONS, nature.com, SCIENCE, Scitation, SPIE Digital Library, IET Digital Library, KAKEN

### C. DOCUMENTS CONSIDERED TO BE RELEVANT

| Category* | Citation of document, with indication, where appropriate, of the relevant passages | Relevant to claim No. |
|---|---|---|
| A | US 2018/0299544 A1 (ELLUMEN, INC.) 18 October 2018 (2018-10-18)<br>paragraphs [0020]-[0025], fig. 1-10 | 1-9 |
| A | CN 110988878 A (OCEAN UNIVERSITY OF CHINA) 10 April 2020 (2020-04-10) | 1-9 |
| A | CN 112098958 A (CHINA RADIO WAVE PROPAGATION RESEARCH INSTITUTE,<br>THE 22ND RESEARCH INSTITUTE OF CHINA ELECTRONICS TEC.) 18 December 2020<br>(2020-12-18) | 1-9 |
| A | CN 111257871 A (UNIVERTSITY SCIENCE AND TECHNOLOGY OF CHINA) 09 June<br>2020 (2020-06-09) | 1-9 |
| A | US 2014/0285371 A1 (RAYTHEON COMPANY) 25 September 2014 (2014-09-25) | 1-9 |
| A | US 2017/0292919 A1 (ELLUMEN, INC.) 12 October 2017 (2017-10-12) | 1-9 |

☑ Further documents are listed in the continuation of Box C.     ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 January 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

66

## INTERNATIONAL SEARCH REPORT

International application No.

**PCT/JP2023/046615**

### C. DOCUMENTS CONSIDERED TO BE RELEVANT

| Category* | Citation of document, with indication, where appropriate, of the relevant passages | Relevant to claim No. |
|---|---|---|
| A | US 4193088 A (THE UNITED STATES OF AMERICA AS REPRESENTED BY THE SECRETARY OF THE NAVY) 11 March 1980 (1980-03-11) | 1-9 |
| A | JP 2019-517673 A (MITSUBISHI ELECTRIC CORPORATION) 24 June 2019 (2019-06-24) | 1-9 |
| A | US 2010/0265124 A1 (TECHNOLOGY SERVICE CORPORATION) 21 October 2010 (2010-10-21) | 1-9 |
| A | JP 2021-010641 A (SUWA UNIV. OF SCIENCE) 04 February 2021 (2021-02-04) | 1-9 |
| A | JP 2008-510585 A (THE GENERAL HOSPITAL CORPORATION) 10 April 2008 (2008-04-10) | 1-9 |
| A | WO 2015/136936 A1 (NATIONAL UNIVERSITY CORPORATION KOBE UNIVERSITY) 17 September 2015 (2015-09-17) | 1-9 |
| A | Flow monitoring by microwave imaging inside a cuboid cavity: Theory and numerical feasibility analysis, Flow Measurements and Instrumentation, 02 October 2021, vol. 82, 102051, pp. 1-10, doi:10.1016/j.flowmeasinst.2021.102051 fig. 1-12 | 1-9 |

Form PCT/ISA/210 (second sheet) (July 2022)

**INTERNATIONAL SEARCH REPORT**

Information on patent family members

| International application No. |
| --- |
| **PCT/JP2023/046615** |

| Patent document cited in search report | | | Publication date (day/month/year) | Patent family member(s) | | | Publication date (day/month/year) |
| --- | --- | --- | --- | --- | --- | --- | --- |
| US | 2018/0299544 | A1 | 18 October 2018 | (Family: none) | | | |
| CN | 110988878 | A | 10 April 2020 | (Family: none) | | | |
| CN | 112098958 | A | 18 December 2020 | (Family: none) | | | |
| CN | 111257871 | A | 09 June 2020 | (Family: none) | | | |
| US | 2014/0285371 | A1 | 25 September 2014 | WO | 2014/149095 | A2 | |
| US | 2017/0292919 | A1 | 12 October 2017 | (Family: none) | | | |
| US | 4193088 | A | 11 March 1980 | (Family: none) | | | |
| JP | 2019-517673 | A | 24 June 2019 | US | 2018/0059237 | A1 | |
| | | | | WO | 2018/037885 | A1 | |
| | | | | EP | 3504560 | A1 | |
| US | 2010/0265124 | A1 | 21 October 2010 | US | 2009/0102701 | A1 | |
| JP | 2021-010641 | A | 04 February 2021 | (Family: none) | | | |
| JP | 2008-510585 | A | 10 April 2008 | JP | 2011-177535 | A | |
| | | | | US | 2006/0058592 | A1 | |
| | | | | WO | 2006/024014 | A2 | |
| | | | | EP | 1793730 | A2 | |
| | | | | EP | 1989997 | A1 | |
| WO | 2015/136936 | A1 | 17 September 2015 | US | 2016/0377557 | A1 | |
| | | | | EP | 3117777 | A1 | |
| | | | | KR | 10-2016-0132920 | A | |
| | | | | CN | 106456137 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6266145 A
- WO 2014125815 A
- WO 2015136936 A
- WO 2021020387 A
- WO 2021053971 A